Europäisches Patentamt

(19) European Patent Office

Office européen des brevets

(11) Numéro de publication: **0 213 052**
**B1**

(12) **FASCICULE DE BREVET EUROPEEN**

(45) Date de publication du fascicule du brevet: **16.05.90**

(21) Numéro de dépôt: **86440058.5**

(22) Date de dépôt: **08.07.86**

(51) Int. Cl.⁵: **A 01 D 34/66,** A 01 D 75/18

(54) **Faucheuse.**

(30) Priorité: **10.07.85 FR 8510697**
**22.11.85 FR 8517425**

(43) Date de publication de la demande:
**04.03.87 Bulletin 87/10**

(45) Mention de la délivrance du brevet:
**16.05.90 Bulletin 90/20**

(84) Etats contractants désignés:
**DE FR GB IT NL**

(56) Documents cités:
**EP-A-0 009 134**
**EP-A-0 118 952**
**CH-A- 445 929**
**DE-A-2 034 450**
**DE-A-2 222 415**
**DE-A-2 423 039**
**DE-A-2 838 420**
**FR-A-2 171 674**
**FR-A-2 358 819**
**FR-A-2 454 748**
**FR-A-2 533 800**
**GB-A-2 023 393**
**NL-A-7 307 171**

(73) Titulaire: **KUHN S.A.**
**4, Impasse des Fabriques**
**F-67700 Saverne (FR)**

(72) Inventeur: **Haberkorn, Jean-Paul**
**11, Rue Sainte-Barbe**
**Monswiller F-67700 Saverne (FR)**
Inventeur: **Neuerburg, Horst**
**6, Rue des Aubépines**
**Haegen F-67700 Saverne (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 213 052 B1

## Description

La présente invention concerne une faucheuse comportant un châssis supportant, au moyen d'organes de liaison, un organe de coupe muni d'outils de coupe et un tambour rotatif s'étendant au-dessus dudit organe de coupe et tournant autour d'un axe de rotation dirigé vers le haut, un dispositif d'entraînement dudit organe de coupe et/ou dudit tambour rotatif et/ou une partie au moins desdits organes de liaison pénétrant à l'intérieur dudit tambour rotatif en traversant la couronne supérieure de celui-ci sensiblement suivant son axe de rotation, un espace formant jeu étant prévu entre le bord interne de ladite couronne supérieure du tambour rotatif et ledit dispositif d'entraînement et/ou ladite partie des organes de liaison pénétrant à l'intérieur du tambour rotatif.

On connaît une telle faucheuse (EP—A—0 009 134) qui comporte une pluralité d'organes de coupe guidés en rotation à la face supérieure d'un carter. L'organe de coupe situé à chaque extrémité du carter est surmonté par un tambour rotatif d'un certain volume. Le dispositif d'entraînement des organes de coupe et des tambours rotatifs et une partie des organes de liaison qui lient les organes de coupe au châssis, pénètrent à l'intérieur du premier tambour en traversant la partie supérieure de celui-ci. L'autre partie des organes de liaison qui lient les organes de coupe au châssis, pénètre à l'intérieur du second tambour en traversant également la partie supérieure de celui-ci. Ces derniers organes de liaison comportent une rotule, de sorte que l'assemblage carter — organes de liaison — châssis ne soit pas rigide. Le carter peut ainsi se déplacer dans une certaine mesure par rapport aux organes de liaison et au châssis. Ceci est important étant donné que le carter est en contact avec le sol pendant le travail, sol qui peut être très irrégulier.

Par ailleurs, comme les tambours sont réalisés par formage et sont fixés sur les organes de coupe par soudure, il peut arriver que la partie supérieure des tambours soit désaxée par rapport aux organes de liaison.

Comme les organes de liaison sont fixes et que les tambours à l'intérieur desquels pénètre une partie au moins de ces organes de liaison, sont rotatifs, il a été nécessaire d'aménager entre les organes de liaison et la partie supérieure des tambours, un certain espace pour permettre d'une part un certain déplacement du carter et des tambours par rapport aux organes de liaison et au châssis, et d'autre part, la rotation des tambours même si leur partie supérieure est désaxée par rapport aux organes de liaison.

Lorsque la faucheuse connue travaille, les deux tambours surmontant les organes de coupe extérieurs, évitent d'une part l'accrochage de fourrage coupé au dispositif d'entraînement et/ou aux organes de liaison, et d'autre part, andainent le fourrage coupé pour réduire la largeur de l'andain laissé par la faucheuse. Le fourrage qui est déplacé par les tambours, monte le long des tambours et une partie de celui-ci arrive à pénétrer à l'intérieur des tambours par l'espace aménagé entre les organes de liaison et la partie supérieure des tambours. Par ailleurs, on trouve également à l'intérieur des tambours des graines de fourrage et de la terre.

Sous l'effet de la vitesse très élevée des tambours, ces débris végétaux et cette terre s'accumulent pour former une masse très compacte et relativement lourde qui provoque des balourds très importants.

Ces balourds augmentent substantiellement la charge sur les paliers qui guident en rotation les organes de coupe que surmontent les tambours, de même que la charge sur la rotule que comportent les organes de liaison pénétrant dans le second tambour. Ceci diminue la durée de vie de ces paliers et de cette rotule.

En sus, cette accumulation de débris végétaux et de terre forme une masse très abrasive qui use rapidement les organes de liaison.

Ces phénomènes sont d'autant plus importants que le volume des tambours est grand.

Le but de la présente invention est de remédier à cet inconvénient.

A cet effet, la faucheuse selon l'invention est caractérisée par le fait que sur ou on-dessus de ladite couronne supérieure du tambour rotatif sont aménagées des pales de repoussement rotatives qui s'étendent à partir du voisinage de la periphérie de ladite couronne supérieure jusqu'au voisinage dudit espace de manière à empêcher l'introduction de végétaux ou d'autres matières par cet espace à l'intérieur dudit tambour rotatif.

Avantageusement, lesdites pales de repoussement rotatives sont dirigées vers l'extérieur dans le sens contraire de leur sens de rotation.

Avec ces caractéristiques, l'introduction de débris végétaux et de terre à l'intérieur des tambours rotatifs est amplement freinée, voire éliminée.

En effet, lors de la rotation, les pales de repoussement rotatives produisent une action mécanique et une action pneumatique sur les débris végétaux et sur la terre qui arrivent dans le voisinage de la partie supérieure des tambours rotatifs. L'action mécanique agit principalement sur les tiges de fourrage coupé et sur la terre, alors que l'action pneumatique agit plutôt sur les petites particules de fourrage ainsi que sur la terre très fine. De cette sorte, les débris végétaux et la terre sont repoussés dès qu'ils arrivent dans le voisinage des pales de repoussement rotatives, et ne peuvent donc sensiblement plus pénétrer à l'intérieur des tambours rotatifs.

Cette action de repoussement est importante lorsque le diamètre exterieur balayé par les pales de repoussement rotatives est plus grand que le diamètre extérieur de la partie supérieure de l'enveloppe du tambour rotatif, où elles sont aménagées.

Avantageusement, le diamètre moyen balayé par les pales repoussement rotatives, est sensiblement égal au diamètre extérieur de la partie supérieure de l'enveloppe du tambour rotatif.

Selon une caractéristique supplémentaire, les pales repoussement rotatives sont fixées sur la face supérieure d'un flasque en forme de couronne. Les pales de repoussement rotatives sont ainsi relativement rigides et peuvent provoquer une action vigoureuse sur les débris végétaux et la terre qui veulent pénétrer dans les tambours.

Selon une forme de réalisation, un organe tubulaire s'étend au niveau du diamètre intérieur balayé par les pales de repoussement rotatives. Préférentiellement, toutes les pales de repoussement rotatives sont liées entre elles au niveau du diamètre intérieur qu'elles balayent, au moyen de cet organe tubulaire.

Avantageusement, cet organe tubulaire est lié au flasque en forme de couronne au niveau du diamètre intérieur de ce dernier. Avantageusement également, l'organe tubulaire s'étend au moins sensiblement jusqu'à la partie supérieure des pales de repoussement rotatives. L'organe tubulaire rigidifie ainsi encore davantage les pales de repoussement rotatives. En sus, il ferme la partie intérieure de l'espace s'étendant entre deux pales de repoussement rotatives voisines. De cette sorte, si un débris quelconque est arrivé à pénétrer dans l'espace entre deux pales de repoussement rotatives voisines, il est arrête par l'organe tubulaire et est ensuite éjecté sous l'effet de la force centrifuge.

Selon une caractéristique supplémentaire, les pales de repoussement rotatives sont fixées sur le tambour rotatif au-dessus duquel elles sont aménagées. Les pales de repoussement rotatives tournent ainsi à une bonne vitesse et peuvent bien agir sur les divers débris. En sus, les pales de repoussement rotatives sont fixes par rapport au tambour rotatif. Ceci permet de bien lier les pales de repoussement rotatives au tambour roatif de sorte qu'il n'y ait aucune ouverture entre les pales de repoussement rotatives et le tambour roatif, ouverture par où pourraient s'introduire des débris qui auraient échappé à l'action des pales de repoussement.

La faucheuse selon l'invention peut comporter une pluralité d'organes de coupe rotatifs dont un premier groupe tourne dans un sens et un deuxième groupe tourne dans le sens contraire. Dans ce cas, les pales de repoussement rotatives qui sont aménagées à la partie supérieure d'une tambour rotatif surmontant un organe de coupe du premier groupe, sont dirigées dans le sens contraire de celles qui sont aménagées à la partie supérieure d'un tambour rotatif surmontant un organe de coupe du second groupe.

Ces organes de coupe rotatifs peuvent, dans une réalisation, être guidés en rotation à la partie supérieure d'un carter qui est lié au châssis au moyen des organes de liaison. Une partie au moins desdits organes de coupe rotatifs sont surmontés par des tambours rotatifs dont l'un au moins est pénétré par le dispositif d'entraînement des organes de coupe rotatifs et/ou par une partie au moins desdits organes de liaison.

Selon une autre réalisation possible, l'organe de coupe est aménagé suivant une barre de coupe. Un tambour rotatif s'étend à chaque extrémité de la barre de coupe qui est liée au châssis au moyen des organes de liaison traversant lesdits tambours rotatifs. Le dispositif d'entraînement de l'organe de coupe s'étend à travers l'un au moins desdits tambours rotatifs qui sont contrarotatifs. Dans ce cas également, les pales de repoussement rotatives qui sont aménagées à la partie supérieure de l'un des tambours rotatifs, sont dirigées dans le sens contraire de celles aménagées à la partie supérieure de l'autre tambour rotatif.

Selon une autre forme de réalisation, les pales de repoussement rotatives sont sensiblement ou entièrement découvertes et une chicane est aménagée entre la partie des organes de liaison pénétrant à l'intérieur du tambour rotatif et le tambour rotatif, cette chicane s'étendant au niveau du diamètre intérieur balayé par les pales de repoussement rotatives.

Grâce à cet agencement, les pales de repoussement rotatives génèrent des flux d'air moins turbulents, tout en continuant à exercer leur action mécanique, et la chicane arrête l'entrée de la terre très fine ou du sable fin à l'intérieur du tambour rotatif.

D'autres caractéristiques et avantages de l'invention ressortent des sous-revendications, ainsi que de la description ci-après de divers exemples non limitatifs de réalisation de l'invention, représentés sur le dessin annexé sur lequel:

La figure 1 représente une vue arrière partielle d'une faucheuse selon l'invention,

La figure 2 représente à une échelle agrandie, une coupe longitudinale suivant II—II de la partie supérieure du tambour droit de la faucheuse de la figure 1.

La figure 3 représente une vue de dessus de l'agencement de la figure 2,

La figure 4 représente à une échelle agrandie, une coupe longitudinale suivant IV de la partie supérieure du tambour gauche de la faucheuse de la figure 1 équipé d'un autre exemple de réalisation,

La figure 5 représente une vue de dessus partiellement en coupe de l'agencement de la figure 4,

La figure 6 représente à une échelle agrandie, une coupe longitudinale suivant VI de la partie supérieure d'un autre exemple de réalisation du tambour droit de la faucheuse de la figure 1,

La figure 7 représente une vue de dessus de l'agencement de la figure 6,

La figure 8 représente à une échelle agrandie, une coupe longitudinale suivant VIII—VIII de la partie supérieure d'un autre exemple de réalisation du tambour droit de la faucheuse de la figure 1,

La figure 9 représente une vue de dessus de l'agencement de la figure 8,

La figure 10 représente une vue arrière partielle d'une autre faucheuse selon l'invention,

La figure 11 représente à une échelle agrandie, une coupe longitudinale suivant XI—XI de la partie supérieure du tambour droit de la faucheuse de la figure 10, équipé d'un exemple de réalisation de l'invention,

La figure 12 représente une vue de dessus partiellement en coupe suivant XII de l'agencement de la figure 11,

La figure 13 représente à une échelle agrandie, une coupe longitudinale suivant XIII—XIII de la partie supérieure du tambour droit de la faucheuse de la figure 10, équipé d'un autre exemple de réalisation de l'invention,

La figure 14 représente une vue de dessus partiellement en coupe suivant XIV de l'agencement de la figure 13,

La figure 15 représente à une échelle agrandie, une coupe longitudinale suivant XV—XV du tambour gauche de la faucheuse de la figure 10, équipé d'un autre exemple de réalisation de l'invention, et

La figure 16 représente une vue de dessus partiellement en coupe suivant XVI de l'agencement de la figure 15.

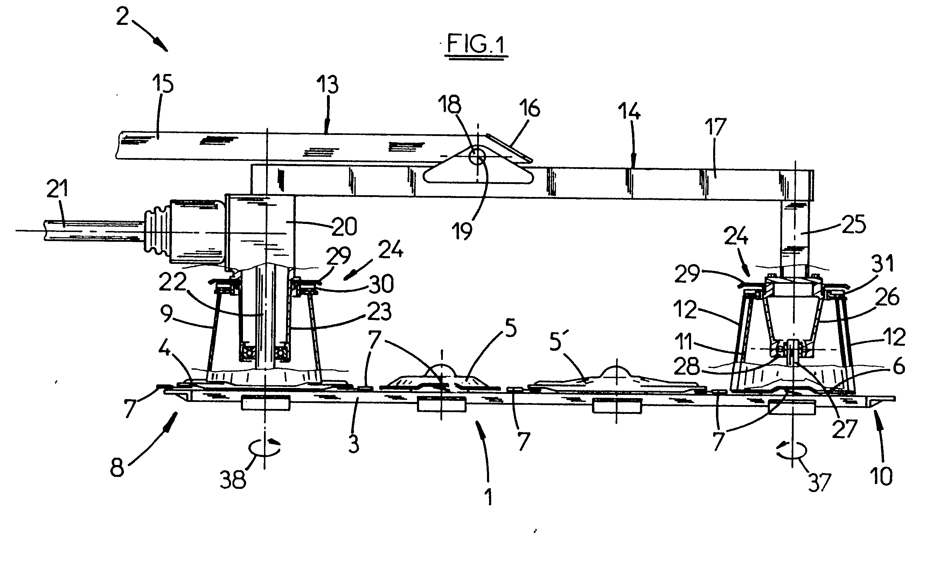

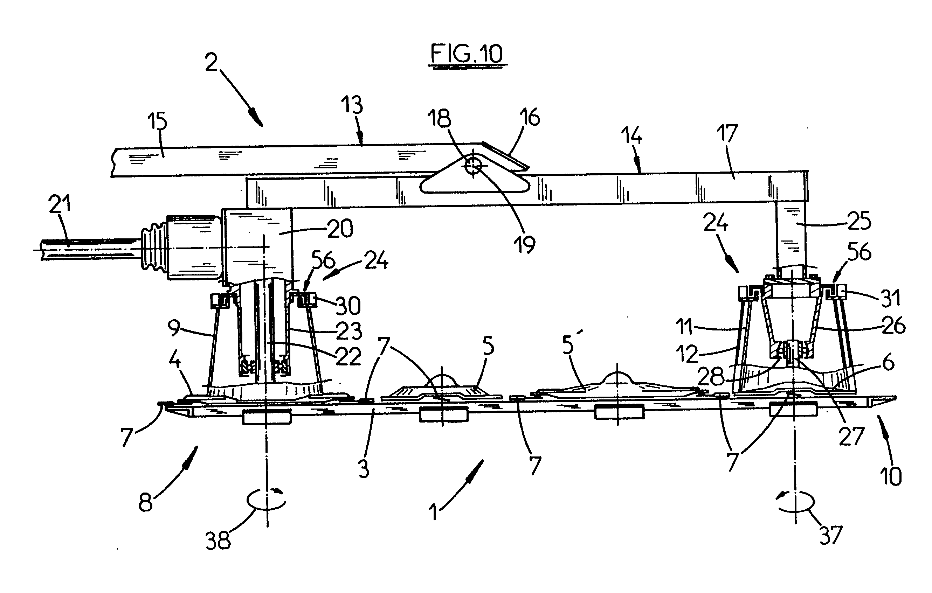

Les figures 1 et 10 montrent la barre de coupe (1) de faucheuses (2) selon l'invention. Cette barre de coupe (1) est muni d'un carter (3) à la partie supérieure duquel sont guidés en rotation des organes de coupe (4, 5, 5', 6). Les organes de coupe (4, 5, 5', 6) sont équipés d'outils de coupe (7).

L'organe de coupe (4) situé à l'extrémité gauche (8) de la barre de coupe (1), est surmonté par un tambour (9), tandis que l'organe de coupe (6) situé à l'extrémité droite (10), est surmonté par un tambour (11). Les tambours (9; 11) ont une hauteur relativement importante (au moins égale au plus grand diamètre de leur enveloppe extérieure), ce qui leur confère un grand volume. Ces tambours (9; 11) sont dans cet exemple, soudés sur l'organe de coupe (4; 6) correspondant et tournent donc avec leur organe de coupe (4; 6) correspondant. Les organes de coupe (4; 6) tournent en sens contraire de telle sorte que le fourrage coupé par ces organes de coupe (4; 6), soit ramené vers le milieu de la barre de coupe (1). Les organes de coupe (4; 6) tournant en sens contraire, les tambours (9; 11) qui les surmontent tournent également en sens contraire. Ces tambours (9; 11) remplissent une fonction d'andainage du fourrage coupé par les organes de coupe (4; 6) de sorte que l'andain laissé par la barre de coupe (1) derrière elle, ait une largeur moindre que la largeur de coupe de la barre de coupe (1). A cet effet, ils sont munis d'entraîneurs (12).

La barre de coupe (1) es reliée au châssis (13) de la faucheuse (2) par des organes de liaison (14).

Sur les figures 1 et 10, on n'a représenté qu'une partie du châssis (13), en l'occurrence la barre support (15). Cette barre support (15) est reliée par son extrémité droite (16) à une poutre support (17) qui est un des organes de liaison (14), au moyen d'une articulation (18) d'axe (19) sensiblement dirigé dans la direction d'avance de la faucheuse au travail.

A l'autre extrémité, le barre support (15) est reliée par une structure non représentée mais à la portée de l'homme de l'art, à l'attelage d'un véhicule tracteur (non représenté) auquel est attelée la faucheuse.

A son extrémite gauche, la poutre support (17) est solidaire d'un carter de renvoi (20) qui contient des éléments d'entraînement des organes de coupe (4, 5, 5', 6) et des tambours (9; 11). Ces élémente sont à la portée de l'homme de l'art. Ils sont actionnés par un arbre de transmission à joints universels (21) qui transmet d'une manière connue de l'homme de l'art, le mouvement depuis la prise de force du véhicule tracteur aux éléments d'entraînement. Le seul élément d'entraînement visible sur les figures 1 et 10, est un arbre (22). Cet arbre (22) traverse le tambour (9) et entraîne en rotation l'organe de coupe (4) et le tambour (9). Cet arbre (22) entraîne également d'autres éléments d'entraînement logés à l'intérieur du carter (3) et qui entraînent en rotation les autres organes de coupe (5; 5'; 6), de même que le tambour (11) surmontant l'organe de coupe (6).

Sur les figures 1 et 10, on voit encore que le carter de renvoi (20) comporte un palier tubulaire (23) qui s'étend vers le bas et travese la partie supérieure (24) du tambour (9). L'arbre (22) tel que décrit, est un élément d'entraînement, mais il est également un organe de liaison puisque l'extrémité gauche (8) de la barre de coupe (1) est reliée à la poutre support (17) par l'intemédiaire de l'arbre (22) et du carter de renvoi (20).

A son extrémité droite, la poutre support (17) comporte une jambe (25) qui s'étend vers le bas. Cette jambe (25) est fixée à son extrémité inférieure sur l'extrémité supérieure d'un palier tubulaire (26). Cette zone de fixation s'étend au-dessus du tambour (11). Ce palier tubulaire (26) traverse la partie supérieure (24) du tambour (11). L'organe de coupe (6) comporte un arbre (27) qui s'étend vers le haut et qui est lié au palier tubulaire (26) au moyen d'un palier rotulant (28) qui autorise à la barre de coupe (1) un certain déplacement. L'extrémité droite (10) de la barre de coupe (1) est donc liée à la poutre support (17) au moyen du palier rotulant (28), du palier tubulaire (26) et de la jambe (25) qui sont des organes de liaison de la barre de coupe (1) au châssis (13).

Sur la figure 1, on voit que la partie supérieure (24) du tambour (9) est obturée par un flasque d'obturation (29) qui est fixé sur le carter de renvoi (20), tandis que la partie supérieure (24) du tambour (11) est obturée par un flasque d'obturation (29) qui est fixé sur le palier tubulaire (26). Le bord extérieur du flasque d'obturation (29) est quelque peu rabattu vers le bas. Entre ce flasque d'obturation (29) et la partie supérieure (24) du tambour (9; 11), il subsiste un certain espace pur des questions de tolérances de fabrication et de déplacement de la barre de coupe (1). Dans cet espace, on a aménagé selon l'invention, des pales de repoussement (30, 31) qui repoussent les débris végétaux ou autres et empêchent sensiblement ceux-ci de pénétrer à l'intérieur des tambours (9; 11).

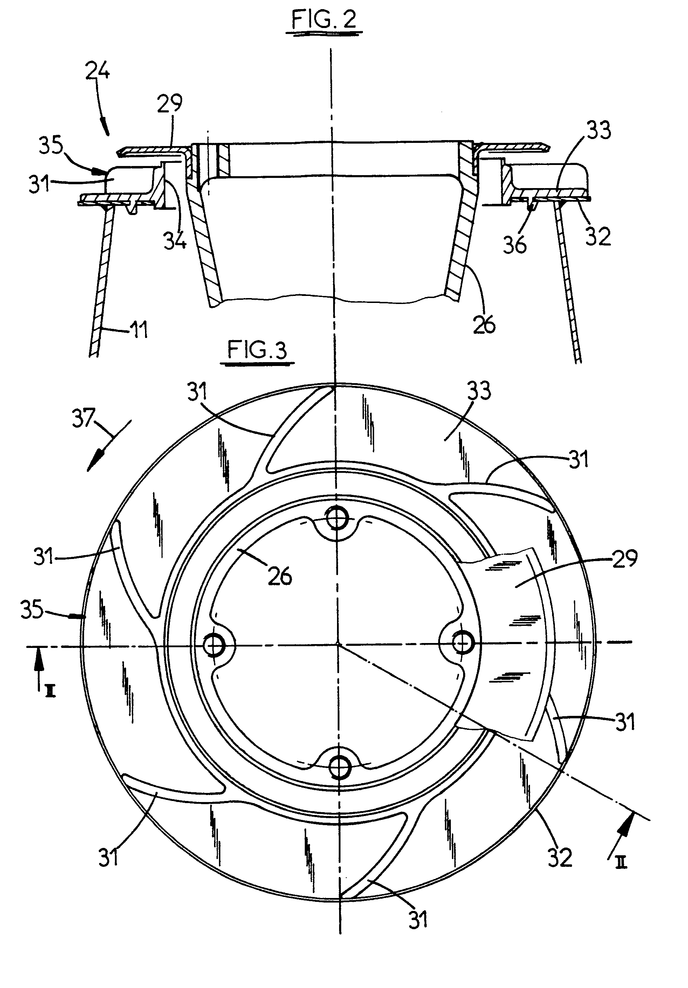

Sur la figure 2 qui montre le tambour (11), on voit que le flasque d'obturation (29) est emmanché sur la partie supérieure du palier tubulaire (26). Ce flasque d'obturation (29) a un diamètre extérieur plus petit que le diamètre extérieur balaye par les pales de repoussement (31).

L'enveloppe extérieure du tambour (11) est solidaire dans sa partie supérieure (24) d'une couronne plane et horizontale (32). Cette couronne (32) a un diamètre extérieur plus grand que le diamètre extérieur supérieur de l'enveloppe du tambour (11). Cette couronne (32) sert de base de fixation aux pals de repoussement (31). Celles-ci s'étendent en regard du flasque d'obturation (29) et sont fixées à leur partie basse sur un flasque en forme de couronne (33). Au niveau du diamètre intérieur balayé par les pales de repoussement (31), celles-ci sont également toutes reliées entre elles au moyen d'un organe tubulaire (34). Cet organe tubulaire (34) s'étend sensiblement jusqu'à la partie supérieure des pales de repoussement (31), de sorte qu'au niveau du diamètre intérieur, l'espace entre deux pales de repoussement (31) voisines est obturé.

En sus, le flasque (33) et l'organe tubulaire (34) sont solidaires l'un de l'autre, au niveau du diamètre intérieur du flasque (33).

Les pales de repoussement (31) sont ainsi relativement rigides et peuvent provoquer une action vigoureuse sur les débris végétaux et la terre, qui veulent pénétrer dans le tambour (11). Du reste, comme l'organe tubulaire (34) ferme la partie intérieure de l'espace s'étendant entre deux pales de repoussement (31) voisines, un débris quelconque qui est arrivé à pénétrer dans l'espace entre deux pales de repoussement (31) voisines, est arrêté par l'organe tubulaire (34) et ne peut donc pénétrer à l'intérieur du tambour (11). Après avoir été arrêté par l'organe tubulaire (34), il est ensuite éjecté sous l'effet de la force centrifuge.

L'ensemble pales de repoussement (31) — flasque (33) — organe tubulaire (34) forme un orane de repoussement (35). Cet organe de repoussement (35) est réalisé en une matière coulée ou injectée. Ceci permet de donner aux pales de repoussement (31) une forme optimale et de reproduire celle-ci relativement fidèlement d'une pièce à l'autre.

Le flasque (33) comporte par ailleurs des clips (36) qui pénètrent dans des ouvertures adéquates, aménagées dans la couronne plane et horizontale (32) du tambour (11).

Sur la figure 2, on voit encore que le diamètre extérieur balayé par les pales de repoussement (31) est plus grand que le diamètre de la partie supérieure de l'enveloppe extérieure du tambour (11). Ce dernier est sensiblement égal au diamètre moyen balayé par les pales de repoussement (31).

Sur la figure 3, on voit la forme des pales de repoussement (31). Celles-ci sont dirigées vers l'extérieur dans le sens contraire de leur sens de rotation (37).

Alors que sur les figures 2 et 3, on a décrit les pales de repoussement (31) du tambour de droite (11), on comprendra que pour le tambour de gauche (9), les pales de repoussement (30) seront en vue de dessus dirigées dans le sens contraire des pales de repoussement (31) puisque le tambour de gauche (9) tourne dans un sens de rotation (38) (voir figure 1) contraire au sens de rotation (37) du tambour de droite (11). De cette sorte, les pales de repoussement (30) seront également dirigées vers l'extérieur en sens contraire du sens de rotation (38). Ces pales de repoussement (30) font partie d'un organe de repoussement (35').

Ceci nécessite alors deux organes de repoussement (35; 35') différents, l'un équipé de pales de repoussement (30) pour le tambour de gauche (9) et l'autre équipé de pales de repoussement (31) pour le tambour de droite (11).

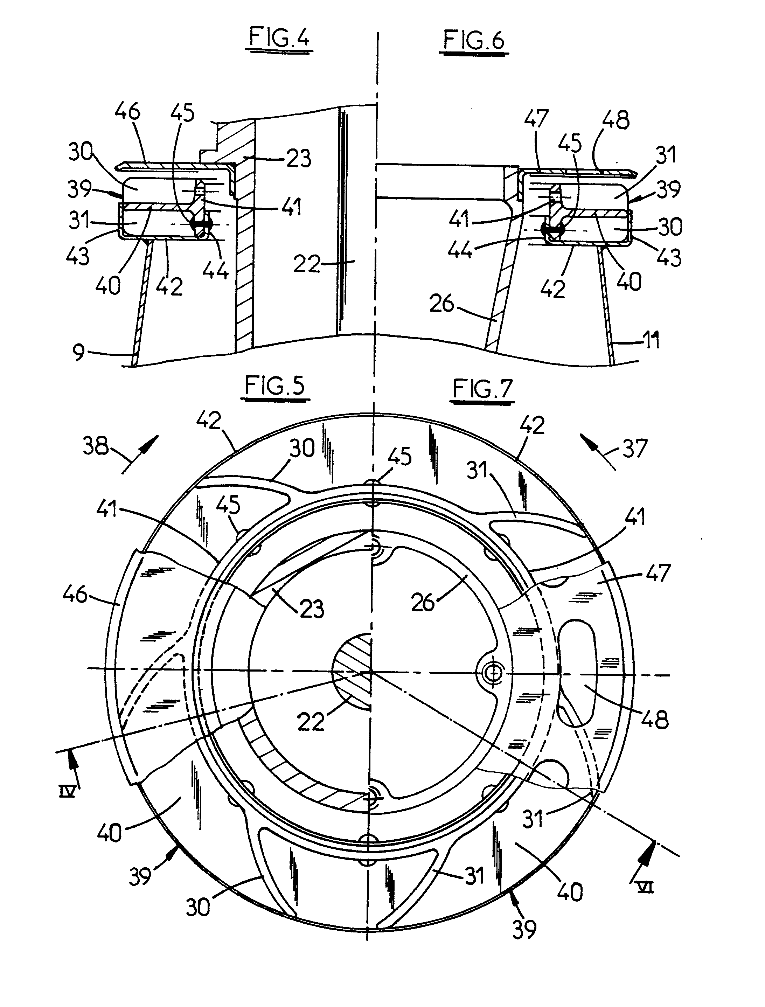

Sur les figures 4 à 7, on a représenté un autre exemple d'organe de repoussement (39) qui peut être monté sur le tambour (9) ou sur le tambour (11) tournant dans le sens (37) contraire au sens de rotation (38) du tambour (9).

Cet organe de repoussement (39) comporte un flasque en forme de couronne (40) qui est lié au niveau de son diamètre intérieur à un organe tubulaire (41). D'un côté du flasque (40) sont fixées des pales de repoussement (30) et de l'autre côté, des pales de repoussement (31). De chaque côté du flasque (40), l'organe tubulaire (41) s'étend environ jusqu'à l'arête supérieure des pales de repoussement (30; 31), de manière à fermer vers l'arrière l'espace entre deux pales de repoussement (30, 31) voisines.

A la partie supérieure de l'enveloppe extérieure des tambours (9; 11) est fixée une cavité circulaire (42) présentant en section transversale, une forme en U ouvert vers le haut. Cette cavité (42) sert au logement de l'organe de repoussement (39). L'aile extérieure (43) de la cavité (42) s'étend sensiblement jusqu'au niveau du flasque (40), de sorte que les pales de repoussement qui ne doivent pas travailler, soient entièrement noyées dans la cavité (42) qui a une largeur sensiblement égale à celle de l'organe de repoussement (39). De cete sorte, l'action néfaste que pourraient produire lesdites pales de repoussement noyées qui ne doivent pas travailler, est empêchée.

Ces organes de repoussement (39) sont fixés sur l'aile intérieure (44) de la cavité (42) au moyen d'organes de fixation (45).

Par ailleurs, dans cet exemple, on voit que le diamètre extérieur des flasques d'obturation (46, 47) situés en regard des pales de repoussement (30; 31), est sensiblement égal au diamètre extérieur balayé par les pales de repoussement (30; 31). Comme dans l'exemple précédent, le bord extérieur des flasques d'obturation (46; 47) est également quelque peu rabattu vers le bas.

Dans l'exemple des figures 6 et 7, on a en aus aménagé dans le flasque (47) situé en regard des pales de repoussement, des trous (48) d'amenmée d'air de sorte à créer un bon flux d'air dirigé ver l'extérieur.

Dans cet exemple de réalisation, il suffit donc de fabriquer un seul type d'organe de repoussement. En effet, dans le cas du tambour (9), il suffira de présenter vers le haut les pales de repoussement (30) et dans le cas du tambour (11), les pales de repoussement (31). Par ailleurs, lorsque les pales de repoussement (30) de l'organe (39) du tambour (9) sont usées, il est possible de monter l'organe (39) du tambour (11) su le tambour (9) en présentant vers le haut les pales de repoussement (30) qui n'avaient pas travaillé et qui ne sont donc pas usées. Réciproquement, on montera alors l'organe (39) du tambour (9) sur le tambour (11) en présentant vers le haut les pales de repoussement (31) intactes.

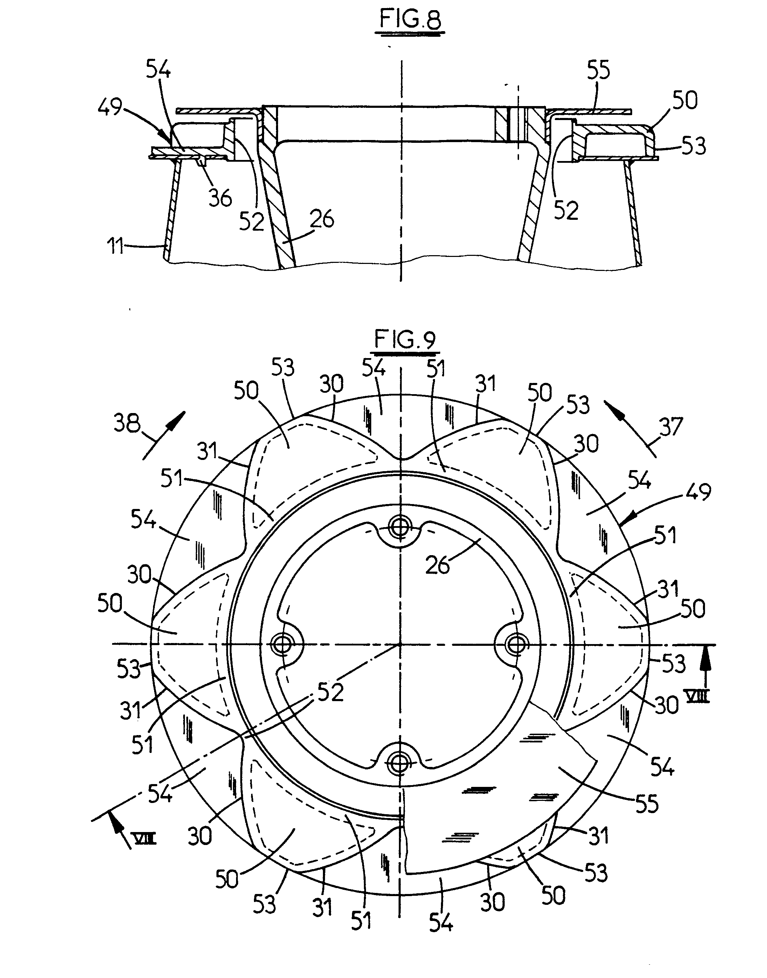

Sur les figures 8 et 9, on a représenté un autre exemple de réalisation d'orane de repoussement (49). Celui-ci comporte un certain nombre de renflements (50) qui ont en vue de dessus sensiblement une forme de triangle curviligne, dont la base (51) est fixée à un organe tubulaire (52) et dont la pointe (53) est dirigée vers l'extérieur. Les renflements (50) sont sensiblement symétriques et leurs bases (51) sont jointives. Leur côté avant, compte tenu du sens de rotation (38), constitue les pales de repoussement (30) et leur côté avant, compte tenu du sens de rotation (37), constitue les pales de repoussement (31).

Entre ces différents renflements (50) sont aménagées des portions de flasque (54) qui s'étendent dans un plan sensiblement horizontal. Ces organes de repoussement (49) sont fixés sur la partie supérieure du tambour (9; 11) au moyen de clips (3). Par ailleurs, un flasque (55) s'étend en regard des renflements (50).

La faucheuse équipée de l'un des divers organes de repoussement (35; 35'; 39; 49) décrits à la lumière des figures 1 à 9, fonctionne de la manière suivante.

Au travail, elle est déplacée par un tracteur dont la prise de force entraîne en rotation les organes de coupe (4; 5; 5'; 6) et les tambours (9; 11). En tournant, les organes de coupe (4; 5; 5'; 6) coupent le fourrage qui se présente devant eux et l'évacuent derrière la barre de coupe (1) ouì il est déposé en andain. La largeur de cet andain est déterminée par les tambours (9; 11). Outre leur fonction d'andainage, ces tambours (9; 11) remplissent encore une fonction de protection du dispositif d'entraînement et des organes de liaison de la barre de coupe (1) au châssis (13). De cette sorte, le fourrage coupé par les organes de coupe (4; 6) ne peut rester accroché audit dispositif d'entraînement ou auxdits organes de liaison.

Le fourrage déplacé par les tambours (9; 11) a tendance à monter le long desdits tambours. Par ailleurs, pendant le fauchage, divers débris végétaux sont en suspension dans l'air, de même que des particules de terre, lorsque la faucheuse rencontre une taupinière par exemple. Ce fourrage, ces débris et ces particules ne peuvent sensiblement pas pénétrer à l'intérieur des tambours (9; 11), grâce aux pales de repoussement (30; 31) qui en tournant les repoussent, en exerçant sur eux une action mécanique et une action pneumatique. La faucheuse selon l'invention a ainsi une durée de vie plus importante.

Sur la figure 10, on voit qu'à la partie supérieure (24) du tambour (9) sont aménagées des pales de repoussement (30) et qu'à la partie supérieure (24) du tambour (11) sont aménagées des pales de repoussement (31), qui sont combinées avec une chicane (56).

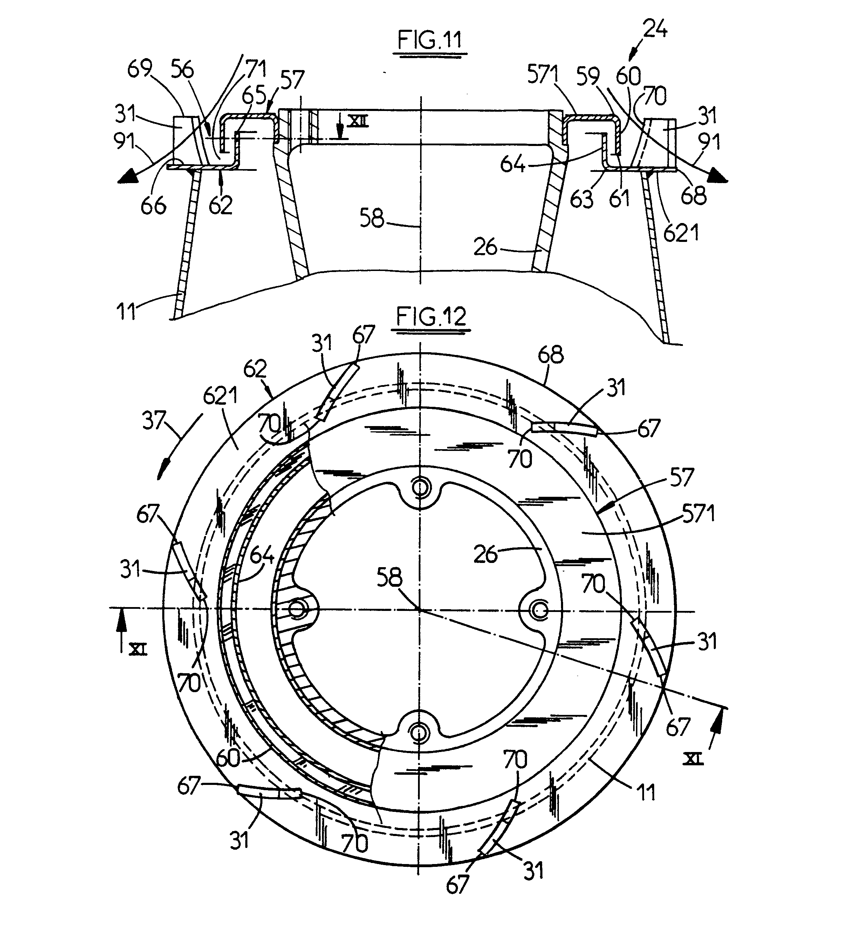

L'agencement des pales de repoussement (30; 31) et de la chicane (56) apparîat plus en détail sur les figures 11 à 16.

Sur la figure 11, on voit que le palier tubulaire (26) est muni d'un flasque (57) qui constitue le premier flasque de la chicane (56). Ce flasque (57) comporte une couronne (571) de préférence circulaire, qui s'étend sensiblement perpendiculairement à l'axe de rotation (58) du tambour (11). Le périmètre extérieur (59) de la couronne (571) est muni d'une paroi de révolution (60) centrée sur l'axe de rotation (58) du tambour (11). Cette paroi de révolution (60) s'étend ves le bas et est dans l'exemple représenté, sensiblement cylindrique. A son extrémité libre (61) éloignée de la couronne (571), la paroi de révolution (60) s'étend dans le voisinage d'un flasque (62) qui constitue le second flasque de la chicane (56).

Ce flasque (62) comporte une couronne (621) de préférence circulaire, qui s'étend également sensiblement perpendiculairement à l'axe de rotation (58) du tambour (11). En sus, le second flasque (62) est situé plus bas que le premier flasque (57). Ce flasque (62) est fixé au sommet du tambour (11). Le périmètre intérieur (63) de la couronne (621) est muni d'une paroi de révolution (64) centrée sur l'axe de rotation (58) du tambour (11). Cette paroi de révolution (64) s'étend vers le haut et est dans l'exemple représenté, sensiblement cylindrique. A son extrémité libre (65) éloignée de la couronne (621), la paroi de révolution (64) s'étend dans le voisinage du premier flasque (57).

La paroi de révolution (64) du second flasque (62) est agencée dans le voisinage de la paroi de révolution (60) du premier flasque (57) et s'étend plus près de l'axe de rotation (58) du tambour (11) que la paroi (60) solidaire du premier flasque (57). Du reste, l'extrémité libre (65) de la paroi (64) est située plus haut que l'extrémité libre (61) de la paroi (60). De cette manière, le premier flasque (57) et sa paroi de révolution (60) correspondante coiffent en partie au moins la paroi de révolution (64) solidaire du second flasque (62).

Le second flasque (62) est, comme dit plus haut, fixé au sommet du tambour (11). Sur la face supérieure (66) de la couronne (621) sont fixées les pales de repoussement (31). L'arête extérieure (67) des pales de repoussement (31) s'étend sensiblement dans le voisinage du périmètre extérieur (68) de la couronne (621) du second flasque (62), dont le diamètre est plus grand que le diamètre du sommet de l'enveloppe du tambour (11). De cette sorte, les pales de repoussement (31) s'étendent en vue de dessus (figure 12) pour l'essentiel sur un diamètre plus grand que le diamètre de la partie supérieure de l'enveloppe du tambour (11).

Les pales de repoussement (31) s'étendent par ailleurs également dans le sens contraire du sens de rotation (37) du tambour (11). L'angle d'inclinaison de ces pales de repoussement (31) est tel que les débris végétaux ne risquent pas d'y rester accrochés, mais que l'effet pneumatique qu'elles procurent ait une intesité suffisante pour refouler les petits débris de végétaux, la terre ou le sable fin.

Comme visible sur la figure 11, la hauteur des pales de repoussement (31) est telle que leur extrémité libre (69) s'étend sensiblement au mêmes niveau que la couronne (571) du premier flasque (57). Les pales de repoussement (31) sont par ailleurs entièrement découvertes.

On voit également sur les figures 11 et 12, que l'arête intérieure (70) des pales de repoussement (31) qui a'étend en regard de la paroi (60) du premier flasque (57), est inclinée vers l'extérieur et vers le haut, de telle sorte que, dans la partie supérieure, ladite arête (70) soit plus éloignée de la paroi (60) que dans sa partie inférieure. De cette manière, les débris végétaux qui arrivent dans la zone située entre la paroi (60) du premier flasque (57) et l'arête intérieure (70) des pales de repoussement (31), peuvent facilement se dégager.

La distance entre les parois (60; 64), de même que la distance entre les extrémités libres (61; 65) des parois (60; 64) et les couronnes (621; 571) des flasques (62; 57) sont telles que le tambour (11) puisse se déplacer par rapport au palier tubulaire (26) sans que les différents organes de la chicane (56) ne viennent en contact.

On voit enfin encore sur la figure 11 que la chicane (56) est agencée de telle manière que l'entrée (71) de ladite chicane (56) s'étend à la partie basse des pales de repoussement (31).

Sur les figures 11 et 12, on n'a représenté que le tambour (11). Il est cependant évident que l'agencement du tambour (9) est similaire, sauf en ce qui concerne les pales de repoussement (30) qui sont dirigées dans le sens contraire des pales (31), étant donné que le tambour (9) tourne dans le sens (38) contraire du sens (37) de rotation du tambour (11).

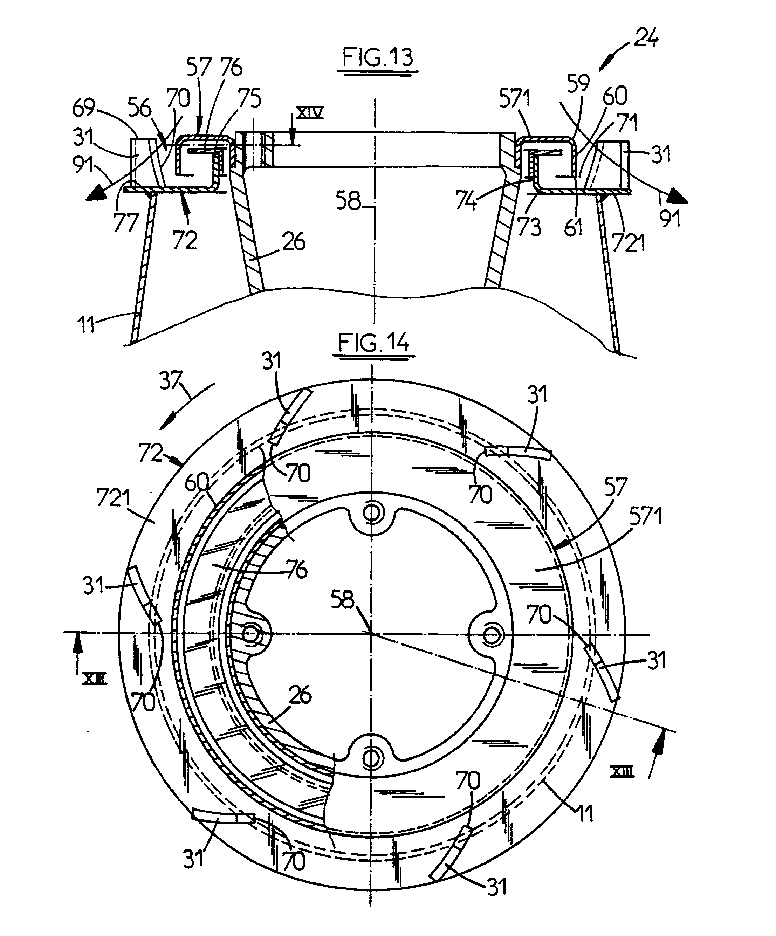

Sur la figure 13, on voit que le palier tubulaire (26) est muni d'un flasque (57) qui constitue le premier flasque de la chicane (56). Ce flasque (57) est sensiblement identique à celui qui est représenté sur les figures 11 et 12.

A l'extrémité libre (61) éloignée de la couronne (571) du flasque (57), la paroi de révolution (60) s'étend dans le voisinage d'un flasque (72) qui constitue dans cet exemple de réalisation, le second flasque de la chicane (56).

Ce flasque (72) comporte une couronne (721) de préférence circulaire, qui s'étend aussi sensiblement perpendiculairement à l'axe de rotation (58) du tambour (11). Le flasque (72) est également situé plus bas que le premier flasque (57) et est fixé au sommet du tambour (11). Le périmètre intérieur (73) de la couronne (721) dudit flasque (72) est muni d'une paroi de révolution (74) centrée sur l'axe de rotation (58) du tambour (11). Cette paroi de révolution (74) s'étend vers le haut, vers le premier flasque (57). En sus, elle s'étend plus près de l'axe de rotation (58) que la paroi (60) du premier flasque (57). Elle est par ailleurs sensiblement cylindrique.

Cette paroi de révolution (74) s'étend jusque dans le voisinage du premier flasque (57). A son extrémité (75) éloignée de la couronne (721), elle est munie d'une seconde couronne (76), laquelle s'étend vers l'extérieur, vers la paroi de révolution (60) du premier flasque (57). Cette seconde couronne (76) s'étend par ailleurs sensiblement perpendiculairement à l'axe de rotation (58) du tambour (11).

Les flasques (57 et 72) sont ainsi agencés de telle sorte que le premier flasque (57) coiffe partiellement le second flasque (72).

La distance qui sépare la paroi de révolution (74) et la seconde couronne (76), du premier flasque (57), est telle que le tambour (11) puisse quelque peu se déplacer par rapport au palier tubulaire (26). Cette distance pourra être réduite si la seconde couronne (76) est réalisée en une matière flexible. Dans ce cas en effet, lors du déplacement du tambour (11) par rapport au palier tubulaire (26) et au premier flasque (57), la seconde couronne (76) pourra se déformer lorsqu'elle arrive en contact avec le premier flasque (57). Ceci est possible car en pratique, de tels contacts ne sont que momentanés.

Sur la face supérieure (77) de la couronne (721) du second flasque (72) sont fixées les pales de repoussement (31). L'agencement et la structure de ces pales (31) sont sensiblement identiques à ceux des pales de repoussement (31) décrites à la lumière des figures 11 et 12.

On voit enfin sur la figure 13 que la chicane (56) est également agencée de telle manière que l'entrée (71) de ladite chicane (56) s'étend à la partie basse des pales de repoussement (31).

Sur les figures 13 et 14, on n'a représenté que le tambour (11). Il est cependant évident que l'agencement du tambour (9) est similaire, sauf en ce qui concerne les pales de repoussement (30) qui sont dirigées dans le sens contraire des pales de repoussement (31), étant donné que le tambour (9) tourne dans le sens (38) contraire du sens (37) de rotation du tambour (11).

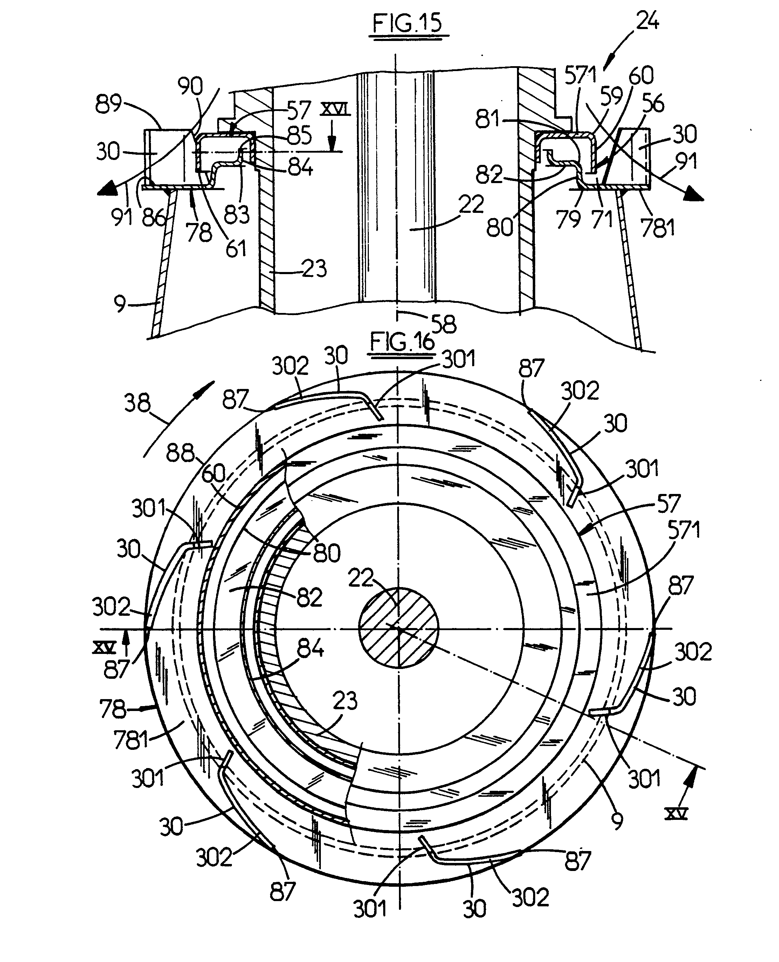

Sur la figure 15, on voit que le palier tubulaire (23) est muni d'un flasque (57) qui constitue le premier flasque de la chicane (56). Ce flasque (57) est sensiblement identique à celui qui est représenté sur les figures, 11, 12, 13 et 14.

A l'extrémité libre (61) éloignée de la couronne (571) du flasque (57), la paroi de révolution (60) s'étend dans le voisinage d'un flasque (78) qui constitue dans cet exemple de réalisation, le second flasque de la chicane (56).

Ce flasque (78) comporte une couronne (781) de préférence circulaire, qui s'étend aussi sensiblement perpendiculairement à l'axe de rotation (58) du tambour (9). Le flasque (78) est également situé plus bas que le premier flasque (57). Ce flasque (78) est fixé au sommet du tambour (9). Le périmètre intérieur (79) de sa couronne (781) est muni d'une paroi de révolution (80) centrée sur l'axe de rotation (58) du tambour (9). Cette paroi de révolution (80) peut être relativement petite. Elle s'étend vers le haut et est sensiblement cylindrique. A son extrémité (81) éloignée de la couronne (781), elle est liée à une seconde couronne (82) qui s'étend vers l'axe de rotation (58) du tambour (9).

Cette seconde couronne (82) s'étend par ailleurs sensiblement perpendiculairement à l'axe de rotation (58) du tambour (9). Son périmètre intérieur (83) est muni d'une paroi de révolution (84) centrée sur l'axe de rotation (58) du tambour (9). Cette paroi de révolution (84) peut aussi être relativement petite. Du reste, elle s'étend vers le haut et est sensiblement cylindrique. A son extrémité libre (85), elle s'étend dans le voisinage du premier flasque (57). En sus, cette paroi (84) s'étend plus près de l'axe (58) que la paroi (80) qui elle-même s'étend plus près de l'axe (58) que la paroi (60) du premier flasque (57).

Les flasques (57 et 78) sont ainsi agencés de telle manière que le premier flasque (57) coiffe en partie au moins le second flasque (78). L'extrémité libre (61) de la paroi (60) du premier flasque (57) s'étend jusqu'au moins dans le voisinage de la première paroi de révolution (80) du second flasque (78). La distance entre les flasques (57) et (78) est telle que le tambour (9) puisse se déplacer par rapport au palier tubulaire (23), sans que les différents organes de la chicane (56) ne viennent en contact.

Sur la face supérieure (86) de la couronne (781) du second flasque (78) sont fixées les pales de repoussement (30). L'arête extérieure (87) des pales de repoussement (30) s'étend sensiblement dans le voisinage du périmètre extérieur (88) du second flasque (78), dont le diamètre est plus grand que le diamètre du sommet de l'enveloppe du tambour (9). De cette sorte, les pales de repoussement (30) s'étendent en vue de dessus (figure 16) pour l'essentiel sur un diamètre plus grand que le diamètre de la partie supérieure de l'enveloppe du tambour (9).

Les pales de repoussement (30) s'étendent par ailleurs également dans le sens contraire du sens de rotation (38) du tambour (9).

Dans cet exemple, chaque pale de repoussement (30) est formée par une pale de repoussement (301) et par une pale de repoussement (302). La pale de repoussement (301) s'étend plus radialement que la pale de repoussement (302) et est agencée avant ladite pale de repoussement (302), compte tenu du sens de rotation (38) du tambour (9). Le tambour (9) comporte ainsi deux groupes de pales de repoussement, les pales de repoussement (301) et les pales de repoussement (302). Les pales de repoussement (301) du premier groupe sont essentiellement destinées à créer une importante action pneumatique, alors que les pales de repoussement (302) du second groupe créent plutôt une action mécanique sur les tiges de fourrage coupé. On comprendra que, dans le cadre de l'invention, les deux groupes de pales de repoussement (301; 302) peuvent aussi être séparés.

Comme visible sur la figure 15, la hauteur des pales de repoussement (30) est telle que leur extrémité libre (89) s'étend plus haut que la couronne (571) du premier flasque (57). Ces pales de repoussement (30) sont également entièrement découvertes.

L'arête intérieure (90) des pales de repoussement (30) est, tout comme l'arête intérieure (70) des pales de repoussement (31) représentées sur les figures 11, 12, 13 et 14, inclinée vers l'extérieure et vers le haut.

On voit enfin encore sur la figure 15 que la chicane (56) est également agencée de telle manière que l'entrée (71) de ladite chicane (56) s'étend à la partie basse des pales de repoussement (30).

Alors que dans les figures 15 et 16, on n'a représenté que le tambour (9), il est cependant évident que l'exemple de réalisation qui y est décrit peut aussi équiper le tambour (11), sauf en ce qui concerne les pales de repoussement (31, 311, 312) qui seront dirigées dans le sens contraire des pales (30, 301, 302).

Dans les trois exemples qui viennent d'être décrits, les pales de repoussement (30; 31) sont réalisées en une matière ayant une grande résistance à la flexion. Ceci est très avantageux car ces pales de repoussement (30; 31) étant sensiblement entièrement découvertes, elles sont très sollicitées pendant le travail, notamment quand elles entrent en contact avec un objet dur tel qu'une pierre par exemple.

La faucheuse équipée des dispositifs qui viennent d'être décrite à la lumière des figures 10 à 16 fonctionne de la manière suivante.

Au travail, elle est également déplacée par un tracteur dont la prise de force entraîne en rotation les organes de coupe (4; 5; 5'; 6) et les tambours (9; 11). En tournant, les organes de coupe (4; 5; 5'; 6) coupent le fourrage qui se présente devant eux et l'évacuent derrière la barre de coupe (1) où il est déposé en andain. La largeur de cet andain est déterminée par les tambours (9; 11). Outre leur fonction d'andainage, ces tambours (9; 11) remplissent encore une fonction de protection du dispositif d'entraînement et des organes de liaison de la barre de coupe (1) au châssis (13). De cette sorte, le fourrage coupé par les organes de coupe (4; 6) ne peut rester accroché audit dispositif d'entraînement ou auxdits organes de liaison.

Le fourrage déplacé par les tambours (9; 11) a tendance à monter le long desdits tambours. Par ailleurs, pendant le fauchage, divers débris végétaux sont en suspension dans l'air, de même que des grosses particules de terre, lorsque la faucheuse rencontre une taupinière par exemple. Lorsque ce fourrage, ces débris végétaux et ces grosses particules de terre arrivent dans la zone d'action des pales de repoussement (30; 31) qui sont sensiblement ou entièrement découvertes, lesdites pales de repoussement (30; 31) en tournant les repoussent, en exerçant sur eux une action essentiellement mécanique. Les dispositifs selon la présente invention sont donc efficaces dans les conditions normales.

Mais ils sont également efficaces dans les conditions où le terrain est très sec et comporte une couche superficielle formée de terre très fine ou de sable très fin.

Ces particules de terre ou de sable fin sont soulevées pendant le travail et se trouvent en suspension dans l'air selon une concentration relativement importante. Cet air chargé de ces particules de terre fine ou de sable fin ne doit pas pouvoir pénétrer à l'intérieur des tambours (9; 11), car à l'intérieur desdits tambours (9; 11) il se déchargerait desdites particules qui resteraient alors dans les tambours (9; 11) et les rempliraient relativement rapidement.

L'agencement selon les figures 10 à 16 permet d'empêcher l'air de sensiblement pénétrer à l'intérieur des tambours (9; 11).

En effet, comme les pales de repoussement (30; 31) sont sensiblement ou entièrement découvertes, et compte tenu de l'agencement de la chicane (56), l'air refoulé vers l'extérieur par les pales de repoussement (30; 31), est aspiré au-dessus du premier flasque (57). Il se crée alors un courant d'air qui s'écoule sensiblement selon la flèche (91). De cette sorte, l'air refoulé par les pales (30; 31) est principalement pompé à l'extérieur des tambours (9; 11) et non à l'intérieur desdits tambours, de manière que l'on ne crée pas d'appel d'air chargé de particules de terre fine ou de sable fin à l'intérieur des tambours (9; 11).

Si toutefois, il arrive que des particules de terre fine ou de sable fin passent entre les pales de repoussement (30; 31), elles sont arrêtées par la paroi de révolution (60) du premier flasque (57) de la chicane (56). Dans ce cas, elles seront, après avoir frappé la paroi (60), directement rejetées vers l'extérieur par le courant d'air et par l'action mécanique générés par les pales de repoussement (30; 31). Si les particules passent entre les pales de repoussement (30; 31) au niveau de l'entrée (71) de la chicane (56), il se passera le phénomène suivant:

Dans le cas de l'exemple de réalisation des figures 11 et 12, les particules seront arrêtées par la paroi de révolution (64) du second flasque (62) de la chicane (56). Sitôt arrêtées, elles tombent sur la couronne (621) du second flasque (62) et sont donc soumises à la force centrifuge, puisque ce flasque (62) tourne. Cette force centrifuge les refoule vers l'extérieur dans la zone d'action des pales de repoussement (30; 31) où elles seront alors également rejetées par le courant d'air et l'action mécanique générés par lesdites pales de repoussement (30; 31).

Dans le cas de l'exemple des figures 13 et 14, les particules de terre fine ou de sable fin seront arrêtées par la paroi de révolution (74) du second flasque (72) de la chicane (56). Sitôt arrêtées, elles tombent sur la couronne (721) du second flasque (72) et sont donc soumises à la force centrifuge qui les refoule vers l'extérieur dans la zone d'action des pales de repoussement (30; 31) où elles seront rejetées vers l'extérieur.

Si des particules sont arrivées jusqu'au niveau de la seconde couronne (76), elles seront également arrêtées, retomberont sur la couronne (721) et seront évacuées comme expliqué plus haut.

Dans le cas de l'exemple des figures 15 et 16, les particules de terre fine ou de sable fin seront arrêtées par la paroi de révolution (80) du second flasque (78) de la chicane (56). Sitôt arrêtées, elles tombent sur la couronne (781) du second flasque (78) et sont donc soumises à la force centrifuge qui les refoule vers l'extérieur dans la zone d'action des pales de repoussement (30; 31) où elles seront rejetées vers l'extérieur, comme expliqué plus haut.

Si des particules de terre fine ou de sable fin sont arrivées jusqu'au niveau de la seconde couronne (82) et de la seconde paroi (84) du second flasque (78) de la chicane (56), elles seront également refoulées par l'action de la force centrifuge générée par le second flasque (78) qui tourne. Ce faisant, elles sont projetées contre l'intérieur de la paroi (60) du premier flasque (57) et tombent alors sur la couronne (781) du second flasque qui les évacue, comme expliqué plus haut.

Grâce à ces agencements, la durée de vie de la faucheuse selon la présente invention est accrue, même en conditions très sèches.

**Revendications**

1. Faucheuse (2) comportant un châssis (13) supportant, au moyen d'organes de liaison (14), un organe de coupe (4; 5; 5'; 6) muni d'outils de coupe (7) et un tambour rotatif (9; 11) s'étendant au-dessus dudit organe de coupe (4; 6) et tournant autour d'un axe de rotation (58) dirigé vers le haut, un dispositif d'entraînement (22) dudit organe de coupe (4; 5; 5'; 6) et/ou dudit tambour rotatif (9; II) et/ou une partie (23; 26) au moins desdits organes de liaison (14) pénétrant à l'intérieur dudit tambour rotatif (9; 11) en traversant la couronne superieure (32, 42, 621, 721, 781) de celui-ci sensiblement suivant son axe de rotation (58), un espace formant feu étant prévue entre le bord interne de ladite couronne supérieure (32, 42, 621, 721, 781) du tambour rotatif (9; 11) et ledit dispositif d'entraînement (22) et/ou ladite partie (23; 26) des organes de liaison (14) pénétrant à l'intérieur du tambour rotatif (9; 11), caractrisée par le fait que sur ou au dessus de ladite couronne supérieure (32, 42, 621, 721, 781) du tambour rotatif (9; 11), sont aménagées des pales de repoussement rotatives (30; 31) qui s'étendent à partor du voisinage de la périphérie de ladite couronne supérieure (32, 42, 621, 721, 781) jusqu'au voisinage dudit espace de manière à empêcher l'introduction de végétaux ou d'autres matières par cet espace à l'intérieur dudit tambour rotatif (9; 11).

2. Faucheuse selon la revendication 1, caractérisée par le fait que les pales de repoussement rotatives (30; 31) sont dirigées vers l'extérieur dans le sens contraire de leur sens de rotation (38; 37).

3. Faucheuse selon l'une au moins des revendications 1 ou 2, caractérisée par le fait qu'en regard des pales de repoussement rotatives (30; 31) est aménagé un flasque d'obturation (29; 46; 47; 55).

4. Faucheuse selon la revendication 3, caractérisée par le fait que le diamètre extérieur du flasque d'obturation (29; 55) est plus petit que le diamètre extérieur balayé par les pales de repoussement rotatives (30; 31).

5. Faucheuse selon la revendication 3, caractérisée par le fait que le diamètre extérieur du flasque d'obturation (46; 47) est sensiblement égal au diamètre extérieur balayé par les pales de repoussement rotatives (30; 31).

6. Faucheuse selon l'une au moins des revendications 3 à 5, caractérisée par le fait que le flasque d'obturation (47) comporte des trous d'amenée d'air (48).

7. Faucheuse selon l'une au moins des revendications 3 à 6, caractérisée par le fait que le bord extérieur du flasque d'obturation (29; 46; 47) est quelque peu rabattu vers le bas.

8. Faucheuse selon l'une au moins des revendications 1 à 7, caractérisée par le fait que le diamètre extérieur balayé par les pales de repoussement rotatives (30; 31) est plus grand que le diamètre extérieur de la partie supérieure (24) de l'enveloppe du tambour rotatif (9; 11).

9. Faucheuse selon la revendication 8, caractérisée par le fait que le diamètre moyen balayé par les pales de repoussement rotatives (30; 31) est sensiblement égal au diamètre extérieur de la partie supérieure (24) de l'enveloppe du tambour rotatif (9; 11).

10. Faucheuse selon l'une au moins des revendications 1 à 9, caractérisée par le fait que les pales de repoussement rotatives (30; 31) sont fixées sur l'une des faces d'un flasque en forme de couronne (33; 40; 54; 62, 621; 72, 721; 78, 781).

11. Faucheuse selon l'une au moins des revendications 1 à 10, caractérisée par le fait qu'un organe tubulaire (34; 41; 52) s'étend au niveau du diamètre intérieur balayé par les pales de repoussement rotatives (30; 31).

12. Faucheuse selon la revendication 11, caractérisée par le fait que toutes les pales de repoussement rotatives (30; 31) sont liées entre elles au niveau du diamètre intérieur qu'elles balayent, au moyen dudit organe tubulaire (34; 41; 52).

13. Faucheuse selon l'une au moins des revendications 11 ou 12, caractérisée par le fait que l'organe tubulaire (34; 41; 52) s'étend au moins sensiblement jusqu'à la partie supérieure des pales de repoussement rotatives (30; 31).

14. Faucheuse selon l'une au moins des revendications 11 à 13, et la revendication 10, caractérisée par le fait que le flasque en forme de couronne (33; 40; 54) est lié à l'organe tubulaire (34; 41; 52) au niveau de son diamètre intérieur.

15. Faucheuse selon l'une au moins des revendications 1 à 14, caractérisée par le fait que les pales de repoussement rotatives (30; 31) sont constituées par une matière coulée ou injectée.

16. Faucheuse selon l'une au moins des revendications 1 à 15, caractérisée par le fait que les pales de repoussement rotatives (30; 31) sont fixées sur le tambour rotatif (9; 11).

17. Faucheuse selon la revendication 16, caractérisée par le fait que les pales de repoussement rotatives (30; 31) sont fixées sur le tambour rotatif (9; 11) au moyen d'organes de fixation par encliquetage (36).

18. Faucheuse selon l'une au moins des revendications 1 à 17, caractérisée par le fait que l'organe de coupe (4; 6) est rotatif.

19. Faucheuse selon la revendication 18, caractérisée par le fait qu'elle comporte une pluralité d'organes de coupe rotatifs (4; 5; 5'; 56) dont un premier groupe (4; 5') tourne dans un sens (38) et un second groupe (5; 6) tourne dans le sens contraire (37), et que les pales de repoussement rotatives (30) qui sont aménagées à la partie supérieure (24) du tambour rotatif (9) qui surmonte un organe de coupe (4) du premier groupe, sont dirigées dans le sens contraire de celles (31) qui sont aménagées à la partie supérieure (24) du tambour rotatif (11) qui surmonte un organe de coupe (6) du second groupe.

20. Faucheuse selon la revendication 19, caractérisée par le fait que les organes de coupe (4, 5, 5', 6) sont guidés en rotation à la partie supérieure d'un carter (3) qui est lié au châssis (13) au moyen des organes de liaison (14), et qu'une partie au moins des organes de coupe rotatifs (4; 6) sont surmontés par des tambours rotatifs (9; II) dont l'un au moins est pénétré par le dispositif d'entraînement (22) des organes de coupe rotatifs (4, 5, 5', 6) et/ou par une partie au moins desdits organes de liaison (14).

21. Faucheuse selon l'une au moins des revendications 1 à 20, caractérisée par le fait que l'organe de coupe est aménagé suivant une barre de coupe (1), qu'un tambour rotatif (9; 11) s'étend à chaque extrémité de la barre de coupe (1) qui est liée au châssis (13) au moyen des organes de liaison (14) traversant lesdits tambours rotatifs (9; 11), le dispositif d'entraînement (22) s'étendant à travers l'un au moins desdits tambours rotatifs (9; 11), que lesdits tambours rotatifs (9; 11) sont contrarotatifs, et que les pales de repoussement rotatives (30; 31) aménagées à la partie supérieure (24) de l'un des tambours rotatifs (9; 11), sont dirigées dans le sens contraire de celles aménagées à la partie supérieure (24) de l'autre tambour rotatif.

22. Faucheuse selon l'une au moins des revendications 19 à 21, caractérisée par le fait qu'à la partie supérieure (24) des tambours rotatifs (9; 11) est aménagé un organe de repoussement rotatif (39) comprenant un flasque en forme de couronne (40) qui est muni sur l'une de ses faces de pales de repoussement (30) adaptées pour équiper un tambour rotatif (9) tournant dans un sens (38), et sur l'autre de ses faces, de pales de repoussement (31) adaptées pour équiper un tambour rotatif (11) tournant dans le sens contraire (37).

23. Faucheuse selon la revendication 22, caractérisée par le fait que le tambour rotatif (9; 11) comporte des organes (42) qui empêchent l'action des pales de repoussement rotatives (31; 30) qui ne doivent pas travailler.

24. Faucheuse selon la revendication 23, caractérisée par le fait que les organes (42) qui empêchent l'action des pales de repoussement rotatives (31; 30) qui ne doivent pas travailler, sont constitués par une cavité circulaire (42) ayant une section en forme de U ouvert vers le haut qui est aménagée à la partie supérieure (24) du tambour rotatif (9; 11), et dans laquelle s'étendent lesdites pales de repoussement rotatives (31; 30) qui ne doivent pas travailler.

25. Faucheuse selon la revendication 24, caractérisée par le fait que l'aile extérieure (43) de la cavité circulaire (42) s'étend sensiblement jusqu'au niveau du flasque en forme de couronne (40) de l'organe de repoussement rotatif (39).

26. Faucheuse selon l'une au moins des revendications 19 à 21, caractérisée par le fait qu'à la partie supérieure (24) des tambours rotatifs (9; 11) est aménagé un organe de repoussement rotatif (49) comprenant des renflements (50) ayant sensiblement une forme de triangle curviligne dont la pointe (53) est dirigée vers l'extérieur et dont l'un des côtés forme une pale de repoussement (30) travaillant dans un sens de rotation (38) tandis que l'autre côté forme une pale de repoussement (31) travaillant dans le sens de rotation contraire (37).

27. Faucheuse selon la revendication 26, caractérisée par le fait qu'entre les renflements (50) s'étendent des portions de flasque (54).

28. Faucheuse selon l'une au moins des revendications 26 ou 27, caractérisée par le fait que les bases (51) des renflements (50) sont jointives.

29. Faucheuse selon l'une au moins des revendications précédentes, caractérisée par le fait que le tambour rotatif (9; ll) a une hauteur au moins égale au plus grand diamètre de son enveloppe extérieure.

30. Faucheuse selon l'une au moins des revendications 1, 2, 8 à 10, 15, 16, 18 à 25 ou 29, caractérisée par le fait que les pales de repoussement rotatives (30; 31) sont sensiblement ou entièrement découvertes, et qu'une chicane (56) est aménagée entre la partie (23; 26) des organes de liaison (14) pénétrant à l'intérieur du tambour rotatif (9; 11) et ledit tambour rotatif (9; 11), cette chicane (56) s'étendant au niveau du diamètre intérieur balayé par les pales de repoussement rotatives (30; 31).

31. Faucheuse selon la revendication 30, caractérisée par le fait que la chicane (56) comporte un premier flasque (57) qui est muni d'une paroi de révolution (60) centrée sur l'axe de rotation (58) du tambour rotatif (9; 11), ladite paroi de révolution (60) s'étendant à son extrémité libre (61) dans le voisinage d'un second flasque (62; 72; 78).

32. Faucheuse selon la revendication 31, caractérisée par le fait que la paroi de révolution (60) est aménagée au niveau du périmètre extérieur (59) du premier flasque (57).

33. Faucheuse selon l'une au moins des revendications 31 ou 32, caractérisée par le fait que le second flasque (62; 72; 78) est muni d'une paroi de révolution (64; 74; 80) centrée sur l'axe de rotation (58) du tambour rotatif (9; 11), ladite paroi (64; 74; 80) s'étendant vers le premier flasque (57).

34. Faucheuse selon la revendication 33, caractérisée par le fait que la paroi de révolution (64; 80) du second flasque (62; 78) s'étend dans le voisinage de la paroi de révolution (60) du premier flasque (57).

35. Faucheuse selon l'une au moins des revendications 33 ou 34, caractérisée par le fait que la paroi de révolution (64; 74; 80) du second flasque (62; 72; 78) s'étend plus près de l'axe de rotation (58) du tambour (9; 11) que la paroi de révolution (60) du premier flasque (57).

36. Faucheuse selon l'une au moins des revendications 33 à 35, caractérisée par le fait que l'extrémité (65; 75) de la paroi de révolution (64; 74) du second flasque (62; 72) la plus proche du premier flasque (57) s'étend dans le voisinage du premier flasque (57).

37. Faucheuse selon l'une au moins des revendications 33 à 36, caractérisée par le fait que la paroi de révolution (64; 74; 80) du second flasque (62; 72; 78) est sensiblement cylindrique.

38. Faucheuse selon l'une au moins des revendications 31 à 37, caractérisée par le fait que le premier flasque (57) comporte une couronne (571) sensiblement circulaire.

39. Faucheuse selon l'une au moins des revendications 31 à 38, caractérisée par le fait que le second flasque (62; 72; 78) comporte une couronne (621; 721; 781) sensiblement circulaire.

40. Faucheuse selon la revendication 38 et/ou 39, caractérisée par le fait que la couronne (571) du premier flasque (57) et/ou la couronne (621; 721; 781) du second flasque (62; 72; 78) s'étend sensiblement perpendiculairement à l'axe de rotation (58) du tambour rotatif (9; 11).

41. Faucheuse selon l'une au moins des revendications 31 à 40, caractérisée par le fait que le premier flasque (57) est situé plus haut que le second flasque (62; 72; 78) et est solidaire de la partie (23; 26) des organes de liaison (14) pénétrant à l'intérieur du tambour rotatif (9; 11), et que le second flasque (62; 72; 78) est solidaire du tambour rotatif (9; 11).

42. Faucheuse selon la revendication 33 et la revendication 41, caractérisée par le fait que l'extrémité (61) de la paroi de révolution (60) du premier flasque (57) est située plus bas que l'extrémité (65; 75; 81) de la paroi de révolution (64; 74; 80) du second flasque (62; 72; 78).

43. Faucheuse selon la revendication 33, caractérisée par le fait que l'extrémité (75; 81) de la paroi de révolution (74; 80) du second flasque (72; 78) située le plus près du premier flasque (57), est munie d'une couronne (76; 82) sensiblement circulaire.

44. Faucheuse selon la revendication 43 caractérisée par le fait que la couronne (76) s'étend vers l'extérieur.

45. Faucheuse selon la revendication 43, caractérisée par le fait que la couronne (82) s'étend vers l'axe de rotation (58) du tambour rotatif (9; 11).

46. Faucheuse selon l'une au moins des revendications 43 à 45, caractérisée par le fait que la couronne (76; 82) du second flasque (72; 78) s'étend sensiblement perpendiculairement à l'axe de rotation (58) du tambour rotatif (9; 11).

47. Faucheuse selon l'une au moins des revendications 43 à 46, caractérisée par le fait que la couronne (76) est réalisée en matière flexible.

48. Faucheuse selon la revendication 45, caractérisée par le fait que la couronne (82) est munie d'une seconde paroi de révolution (84) centrée sur l'axe de rotation (58) du tambour rotatif (9; 11) et dont l'extrémité libre (85) s'étend dans le voisinage du premier flasque (57).

49. Faucheuse selon la revendication 48 caractérisée par le fait que la seconde paroi de révolution (84) du second flasque (78) s'étend plus près de l'axe de rotation (58) du tambour rotatif (9; 11) que la première paroi (80).

50. Faucheuse selon l'une au moins des revendications 48 ou 49, caractérisée par le fait que la seconde paroi de révolution (84) du second flasque (78) est sensiblement cylindrique.

51. Faucheuse selon l'une au moins des revendications 31 à 50, caractérisée par le fait que les pales de repoussement rotatives (30; 31) sont fixées sur la face supérieure (66; 77; 86) du flasque (62; 72; 78) situé le plus bas.

52. Faucheuse selon la revendication 51, caractérisée par le fait que l'extrémité libre (69; 89) des pales de repoussement rotatives (30; 31) s'étend au moins sensiblement jusqu'au niveau du flasque (57) situé le plus haut.

53. Faucheuse selon la revendication 52 et la revendication 38, caractérisée par le fait que l'extrémité libre (69; 89) des pales de repoussement rotatives (30; 31) s'étend au moins sensiblement jusqu'au niveau de la couronne (571) du flasque (57) situé le plus haut.

54. Faucheuse selon l'une au moins des revendications 51 à 53, caractérisée par le fait que l'arête (70; 90) des pales de repoussement rotatives (30; 31) située en regard de la paroi de révolution (60) du premier flasque (57), est inclinée vers l'extérieur et vers le haut, de sorte que dans sa partie supérieure ladite arête (70; 90) soit plus éloignée de ladite paroi (60) que dans sa partie inférieure.

55. Faucheuse selon l'une au moins des revendications 30 à 54, caractérisée par le fait que chaque tambour rotatif (9; 11) est muni de deux groupes de pales de repoussement rotatives (301, 302; 311, 312) dont celles (301; 311) du premier groupe sont dirigées plus radialement que celles (302; 312) du second groupe.

56. Faucheuse selon la revendication 55, caractérisée par le fait qu'une pale de repoussement rotative (301; 311) du premier groupe et une pale de repoussement rotative (302; 312) du second groupe forment une seule et même pale de repoussement rotative (30; 31).

57. Faucheuse selon l'une au moins des revendications 55 ou 56, caractérisée par le fait que les pales de repoussement rotatives (301; 311) du premier groupe sont, compte tenu du sens de rotation (38; 37) des tambours rotatifs (9; 11), agencées avant les pales de repoussement rotatives (302; 312) du second groupe.

58. Faucheuse selon les revendications 56 et 57, caractérisée par le fait que les pales de repoussement rotatives (301; 311) du premier groupe s'étendent le plus près de la paroi de révolution (60) du premier flasque (57).

59. Faucheuse selon l'une au moins des revendications 30 à 58, caractérisée par le fait que les pales de repoussement rotatives (30; 31) sont réalisées en une matière résistant à la flexion.

**Patentansprüche**

1. Mähmaschine (2) mit einem Gestell (13), das über Verbindungselement (14) ein Schneidorgan (4; 5; 5'; 6), das mit Schneidwerkzeugen (7) versehen ist und eine drehbare Trommel (9; 11), die sich oberhalb des Schneidorgans (4; 6) befindet und um eine aufrechtstehende Rotationsachse (58) dreht, trägt, wobei eine Antriebseinrichtung (22) für das Schneidorgan (4; 5; 5'; 6) und/oder die drehbare Trommel (9; 11) und/oder zumindest einen Teil (23; 26) der Verbindungselemente (14) ins Innere der drehbaren Trommel (9; 11) ragt, bzw. ragen, und deren oberen Ring (32, 42, 621, 721, 781) im wesentlichen entlang ihrer Rotationsachse (58) durchsetzt, bzw. durchsetzen, wobei ein Spiel zulassender Zwischenraum zwischen dem Innenrand des oberen Rings (32, 42, 621, 721, 781) der drehbaren Trommel (9; 11) und der Antriebseinrichtung (22) und/oder dem Teil (23; 26) der Verbindungselemente (14), die in das Innere der drehbaren Trommel (9; 11) ragen, vorgesehen ist, dadurch gekennzeichnet, dass auf oder über dem oberen Ring (32, 42, 621, 721, 781) der drehbaren Trommel (9; 111) drehbare Abweiserflügel (30; 31) angebracht sind, die aus der Nähe des Umfangs des oberen Rings (32, 42, 621, 721, 781) bis in die Nähe des Zwischenraums reichen, derart, dass das Eindringen von Pflanzen oder anderen Materialien durch diesen Zwischenraum in das Innere der drehbaren Trommel (9; 11) verhindert wird.

2. Mähmaschine nach Anspruch 1, dadurch gekennzeichnet, dass die drehbaren Abweiserflügel (30; 31) in der zu ihrer Drehrichtung (38; 37) entgegengesetzten Richtung nach aussen gerichtet sind.

3. Mähmaschine nach zumindest einem der Ansprüche 1 oder 2, dadurch gekennzeichnet, dass ein Abdeckflansch (29; 46; 47; 55) gegenüber den drehbaren Abweiserflügeln (30; 31) angebracht ist.

4. Mähmaschine nach Anspruch 3, dadurch gekennzeichnet, dass der Aussendurchmesser des Abdeckflansches (29; 55) kleiner als der von den drehbaren Abweiserflügeln (30; 31) bestrichene Aussendurchmesser ist.

5. Mähmaschine nach Anspruch 3, dadurch gekennzeichnet, dass der Aussendurchmesser des Abdeckflansches (46; 47) im Wesentlichen gleich dem von den drehbaren Abweiserflügeln (30; 31) bestrichenen Aussendurchmesser ist.

6. Mähmaschine nach zumindest einem der Ansprüche 3 bis 5, dadurch gekennzeichnet, dass der Abdeckflansch (47) Luftzufuhrlöcher (48) aufweist.

7. Mähmaschine nach zumindest einem der Ansprüche 3 bis 6, dadurch gekennzeichnet, dass der Aussenrand des Abdeckflansches (29; 46; 47) ein wenig nach unten gebogen ist.

8. Mähmaschine nach zumindest einem der Ansprüche 1 bis 7, dadurch gekennzeichnet, dass der von den drehbaren Abweiserflügeln (30; 31) bestrichene Aussendurchmesser grösser als der Aussendurchmesser des oberen Teils (24) des Mantels der drehbaren Trommel (9; 11) ist.

9. Mähmaschine nach Anspruch 8, dadurch gekennzeichnet, dass der mittlere von den drehbaren Abweiserflügeln (30; 31) bestrichene Durchmesser im wesentlichen gleich dem Aussendurchmesser des oberen Teils (24) des Mantels der drehbaren Trommel (9; 11) ist.

10. Mähmaschine nach zumindest einem der Ansprüche 1 bis 9, dadurch gekennzeichnet, dass die drehbaren Abweiserflügel (30; 31) auf einer Seite eines ringförmigen Flansches (33; 40; 54; 62, 621; 72, 721; 78, 781) befestigt sind.

11. Mähmaschine nach zumindest einem der Ansprüche 1 bis 10, dadurch gekennzeichnet, dass sich ein rohrförmiges Organ (34; 41; 52) im Bereich des inneren von den drehbaren Abweiserflügeln (30; 31) bestrichenen Durchmesser befindet.

12. Mähmaschine nach Anspruch 11, dadurch gekennzeichnet, dass alle drehbaren Abweiserflügel (30; 31) miteinander im Bereich des von ihnen bestrichenen Innendurchmessers durch das rohrförmige Organ (34; 41; 52) verbunden sind.

13. Mähmaschine nach zumindest einem der Ansprüche 11 oder 12, dadurch gekennzeichnet, dass das rohrförmige Organ (34; 41; 52) im wesentlichen bis zum oberen Teil der drehbaren Abweiserflügel (30; 31) reicht.

14. Mähmaschine nach zumindest einem der Ansprüche 11 bis 13 und Anspruch 10, dadurch gekennzeichnet, dass der ringförmige Flansch (33; 40; 54) mit dem rohrförmigen Organ (34; 41; 52) im Bereich seines Innendurchmessers verbunden ist.

15. Mähmaschine nach zumindest einem der Ansprüche 1 bis 14, dadurch gekennzeichnet, dass die drehbaren Abweiserflügel (30; 31) aus einem gegossenen oder spritzgeformten Material bestehen.

16. Mähmaschine nach zumindest einem der Ansprüche 1 bis 15, dadurch gekennzeichnet, dass die drehbaren Abweiserflügel (30; 31) auf der drehbaren Trommel (9; 11) befestigt sind.

17. Mähmaschine nach Anspruch 16, dadurch gekennzeichnet, dass die drehbaren Abweiserflügel (30; 31) auf der drehbaren Trommel (9; 11) mittels einrastender Befestigungsorgane (36) fixiert sind.

18. Mähmaschine nach zumindest einem der Ansprüche 1 bis 17, dadurch gekennzeichnet, dass das Schneidorgan (4; 6) drehbar ist.

19. Mähmaschine nach Anspruch 18, dadurch gekennzeichnet, dass sie mehrere drehbare Schneidorgane (4; 5; 5', 6) aufweist, von denen eine erste Gruppe (4; 5') in einem Sinn (38) und eine zweite Gruppe (5; 6) im Gegensinn (37) rotiert, und dass die drehbaren Abweiserflügel (30), die auf dem oberen Teil (24) der drehbaren Trommel (9) angebracht sind, die sich über einem Schneidorgan (4) der ersten Gruppe befindet, gegensinnig zu jenen (31) ausgerichtet sind, die auf dem oberen Teil (24) der drehbaren Trommel (11) angebracht sind, die sich über einem Schneidorgan (6) der zweiten Gruppe befindet.

20. Mähmaschine nach Anspruch 19, dadurch gekennzeichnet, dass die Schneidorgane (4; 5; 5'; 6) drehbar im oberen Teil eines Kastens (3) geführt sind, der mit dem Gestell (13) über die Verbindungselemente (14) verbunden ist und dass sich zumindest über einem Teil der Schneidorgane (4; 6) drehbare Trommeln (9; 11) befinden, von denen zumindest eine von der Antriebseinrichtung (22) der drehbaren Schneidorgane (4, 5, 5', 6) und/oder von zumindest einem Teil der Verbindungselemente (14) durchsetzt ist.

21. Mähmaschine nach zumindest einem der Ansprüche 1 bis 20, dadurch gekennzeichnet, dass das Schneidorgan entlang eines Mähbalkens (1) angeordnet ist, dass eine drehbare Trommel (9; 11) an jedem Ende des Mähbalkens (1) angeordnet ist, der mit dem Gestell (13) mittels die drehbaren Trommeln (9; 11) durchsetzender Verbindungselemente (14) verbunden ist, wobei sich die Antriebseinrichtung (22) durch zumindest eine der drehbaren Trommeln (9; 11) erstreckt, dass die drehbaren Trommeln (9; 11) gegensinnig rotieren und dass die am oberen Teil (24) einer der drehbaren Trommeln (9; 11) angebrachten drehbaren Abweiserflügel (30; 31) gegensinnig zu jenen, die am oberen Teil (24) der anderen drehbaren Trommel angebracht sind, gerichtet sind.

22. Mähmaschine nach zumindest einem der Ansprüche 19 bis 21, dadurch gekennzeichnet, dass am oberen Teil (24) der drehbaren Trommeln (9; 11) ein drehbares Abweiserorgan (39) angebracht ist, bestehend aus einem ringförmigen Flansch (40), der auf einer seiner Seiten mit für die Ausrüstung einer in einer Richtung (38) rotierenden drehbaren Trommel (9) geeigneten Abweiserflügeln (30) versehen ist, und auf der anderen seiner Seiten mit für die Ausrüstung einer in der entgegengesetzten Richtung (37) rotierenden drehbaren Trommel (11) geeigneten Abweiserflügeln (31) rotierenden drehbaren Trommel (11) geeigneten Abweiserflügeln (31) versehen ist.

23. Mähmaschine nach Anspruch 22, dadurch gekennzeichnet, dass die drehbare Trommel (9; 11) Organe (42) umfasst, die die Wirkung der drehbaren Abweiserflügel (31; 30), die nicht arbeiten sollen, verhindern.

24. Mähmaschine nach Anspruch 23, dadurch gekennzeichnet, dass die, die Wirkung der drehbaren Abweiserflügel (31; 30), die nicht arbeiten sollen, verhindernden Organe (42) aus einem runden Raum (42) mit nach oben offenem U-förmigen Querschnitt bestehen, der am oberen Teil (24) der drehbaren Trommel (9; 11) vorgesehen ist und in den sich die drehbaren Abweiserflügel (31; 30), die nicht arbeiten sollen, erstrecken.

25. Mähmaschine nach Anspruch 24, dadurch gekennzeichnet, dass der Aussenschenkel (43) des runden Raumes (42) im wesentlichen bis zur Höhe des ringförmigen Flansches (40) des drehbaren Abweiserorgans (39) reicht.

26. Mähmaschine nach zumindest einem der Ansprüche 19 bis 21, dadurch gekennzeichnet, dass am oberen Teil (24) der drehbaren Trommeln (9; 11) ein drehbares Abweiserorgan (49) angebracht ist, das Ausbauchungen (50) umfasst, die im wesentlichen die Form eines krummlinigen Dreiecks haben, dessen Spitze (53) nach aussen weist und dessen eine Seite einen Abweiserflügel (30) bildet, der in einem Drehsinn (38) arbeitet, während die andere Seite einen Abweiserflügel (31) bildet, der im entgegengesetzten Drehsinn (37) arbeitet.

27. Mähmaschine nach Anspruch 26, dadurch gekennzeichnet, dass sich zwischen den Ausbauchungen (50) Flanschabschnitte (54) befinden.

28. Mähmaschine nach zumindest einem der Ansprüche 26 oder 27, dadurch gekennzeichnet, dass die Basen (51) der Ausbauchungen (50) aneinanderstossend sind.

29. Mähmaschine nach zumindest einem der vorhergehenden Ansprüche, dadurch gekennzeichnet, dass die drehbare Trommel (9; 11) eine Höhe hat, die zumindest gleich dem grössten Durchmesser ihres Aussenmantels ist.

30. Mähmaschine nach zumindest einem der Ansprüche 1, 2, 8 bis 10, 15, 16, 18 bis 25 oder 29, dadurch gekennzeichnet, dass die drehbaren Abweiserflügel (30; 31) im wesentlichen oder vollständig unabgedeckt sind und dass ein Labyrinth (56) zwischen dem Teil (23; 26) der in das Innere der drehbaren Trommel (9; 11) ragenden Verbindungsorgane (14) und der drehbaren Trommel (9; 11) angeordnet ist, welches Labyrinth (56) sich in dem Bereich des von den drehbaren Abweiserflügeln (30; 31) bestrichenen Innendurchmesser erstreckt.

31. Mähmaschine nach Anspruch 30, dadurch gekennzeichnet, dass das Labyrinth (56) einen ersten Flansch (57) umfasst, der mit einer zur Drehachse (58) der drehbaren Trommel (9; 11) koaxial angeordneten Ringwand (60) versehen ist, wobei die Ringwand (60) an ihrem freien Ende (61) in die Nähe eines zweiten Flansches (62; 72; 78) reicht.

32. Mähmaschine nach Anspruch 31, dadurch gekennzeichnet, dass die Ringwand (60) im Bereich des Aussenumfangs (59) des ersten Flansches (57) angeordnet ist.

33. Mähmaschine nach zumindest einem der Ansprüche 31 oder 32, dadurch gekennzeichnet, dass der zweite Flansch (62; 72; 78) mit einer zur Drehachse (58) der drehbaren Trommel (9; 11) koaxial angeordneten Ringwand (64; 74; 80) versehen ist, welche Wand (64; 74; 80) in Richtung des ersten Flansches (57) hin erstreckt.

34. Mähmaschine nach Anspruch 33, dadurch gekennzeichnet, dass die Ringwand (64; 80) des zweiten Flansches (62; 78) sich in der Nähe der Ringwand (60) des ersten Flansches (57) erstreckt.

35. Mähmaschine nach zumindest einem der Ansprüche 33 oder 34, dadurch gekennzeichnet, dass sich die Ringwand (64; 74; 80) des zweiten Flansches (62; 72; 78) näher der Drehachse (58) der Trommel (9; 11) befindet als die Ringwand (60) des ersten Flansches (57).

36. Mähmaschine nach zumindest einem der Ansprüche 33 bis 35, dadurch gekennzeichnet, dass das dem ersten Flansch (57) nächstliegende Ende (65; 75) der Ringwand (64; 74) des zweiten Flansches (62; 72) in die Nähe des ersten Flansches (57) ragt.

37. Mähmaschine nach zumindest einem der Ansprüche 33 bis 36, dadurch gekennzeichnet, dass die Ringwand (64; 74; 80) des zweiten Flansches (62; 72; 78) im wesentlichen zylindrisch ist.

38. Mähmaschine nach zumindest einem der Ansprüche 31 bis 37, dadurch gekennzeichnet, dass der erste Flansch (57) einen im wesentlichen kreisförmigen Ring (571) umfasst.

39. Mähmaschine nach zumindest einem der Ansprüche 31 bis 38, dadurch gekennzeichnet, dass der zweite Flansch (62; 72; 78) einen im wesentlichen kreisförmigen Ring (621; 721; 781) umfasst.

40. Mähmaschine nach Anspruch 38 und/oder 39, dadurch gekennzeichnet, dass der Ring (571) des ersten Flansches (57) und/oder der Ring (621; 721; 781) des zweiten Flansches (62; 72; 78) im wesentlichen senkrecht zur Drehachse (58) der drehbaren Trommel (9; II) angeordnet sind.

41. Mähmaschine nach zumindest einem der Ansprüche 31 bis 40, dadurch gekennzeichnet, dass der erste Flansch (57) höher als der zweite Flansch (62; 72; 78) angeordnet und fest mit dem in das Innere der drehbaren Trommel (9; 11) ragenden Teil (23; 26) der Verbindungsorgane (14) verbunden ist und dass der zweite Flansch (62; 72; 78) fest mit der drehbaren Trommel (9; 11) verbunden ist.

42. Mähmaschine nach Anspruch 33 und Anspruch 41, dadurch gekennzeichnet, dass das Ende (61) der Ringwand (60) des ersten Flansches (57) tiefer als das Ende (65; 75; 81) der Ringwand (64; 74; 80) des zweiten Flansches (62; 72; 78) angeordnet ist.

43. Mähmaschine nach Anspruch 33, dadurch gekennzeichnet, dass das dem ersten Flansch (57) nächstliegende Ende (75; 81) der Ringwand (74; 80) des zweiten Flansches (72; 78) mit einem im wesentlichen kreisförmigen Ring (76; 82) versehen ist.

44. Mähmaschine nach Anspruch 43, dadurch gekennzeichnet, dass sich der Ring (76) nach aussen erstreckt.

45. Mähmaschine nach Anspruch 43, dadurch gekennzeichnet, dass sich der Ring (82) zur Drehachse (58) der drehbaren Trommel (9; 11) hin erstreckt.

46. Mähmaschine nach zumindest einem der Ansprüche 43 bis 45, dadurch gekennzeichnet, dass der Ring (76; 82) des zweiten Flansches (72; 78) im wesentlichen senkrecht zur Drehachse (58) der drehbaren Trommel (9; 11) angeordnet ist.

47. Mähmaschine nach zumindest einem der Ansprüche 43 bis 46, dadurch gekennzeichnet, dass der Ring (76) aus flexiblem Material hergestellt ist.

48. Mähmaschine nach Anspruch 45, dadurch gekennzeichnet, dass der Ring (82) mit einer zweiten zur Drehachse (58) der drehbaren Trommel (9; 11) koaxial angeordneten Ringwand (84) versehen ist, deren freies Ende (85) in die Nähe des ersten Flansches (57) ragt.

49. Mähmaschine nach Anspruch 48, dadurch gekennzeichnet, dass sich die zweite Ringwand (84) des zweiten Flansches (78) näher der Drehachse (58) der drehbaren Trommel (9; 11) befindet als die erste Wand (80).

50. Mähmaschine nach zumindest einem der Ansprüche 48 oder 49, dadurch gekennzeichnet, dass die zweite Ringwand (84) des zweiten Flansches (78) im wesentlichen zylindrisch ist.

51. Mähmaschine nach zumindest einem der Ansprüche 31 bis 50, dadurch gekennzeichnet, dass die drehbaren Abweiserflügel (30; 31) auf der Oberseite (66; 77; 86) des am tiefsten liegenden Flansches (62; 72; 78) besfestigt sind.

52. Mähmaschine nach Anspruch 51, dadurch gekennzeichnet, dass das freie Ende (69; 89) der drehbaren Abweiserflügel (30; 31) zumindest im wesentlichen bis zur Höhe des oberen Flansches (57) reicht.

53. Mähmaschine nach Anspruch 52 und Anspruch 38, dadurch gekennzeichnet, dass das freie Ende (69; 89) der drehbaren Abweiserflügel (30; 31) zumindest im wesentlichen bis zur Höhe des Rings (571) des obersten Flansches (57) ragt.

54. Mähmaschine nach zumindest einem der Ansprüche 51 bis 53, dadurch gekennzeichnet, dass die der Ringwand (60) des ersten Flansches (57) zugekehrte Kante (70; 90) der drehbaren Abweiserflügel (30; 31) nach aussen und oben geschrägt ist, derart, dass die Kante (70; 90) in ihrem oberen Teil weiter von der Wand (60) entfernt ist als in ihrem unteren Teil.

55. Mähmaschine nach zumindest einem der Ansprüche 30 bis 54, dadurch gekennzeichnet, dass jede drehbare Trommel (9; 11) mit zwei Gruppen drehbarer Abweiserflügel (301; 302; 311; 312) versehen ist, von den jede (301; 311) der ersten Gruppe stärker radial ausgerichtet sind als jene (302; 312) der zweiten Gruppe.

56. Mähmaschine nach Anspruch 55, dadurch gekennzeichnet, dass ein drehbarer Abweiserflügel (301, 311) der ersten Gruppe und ein drehbarer Abweiserflügel (302; 312) der zweiten Gruppe zusammen einen einzigen Abweiserflügel (30; 31) bilden.

57. Mähmaschine nach zumindest einem der Ansprüche 55 oder 56, dadurch gekennzeichnet, dass die drehbaren Abweiserflügel (301; 311) der ersten Gruppe in Drehrichtung (38; 37) der drehbaren Trommeln (9; 11) vor den Abweiserflügeln (302; 312) der zweiten Gruppe angeordnet sind.

58. Mähmaschine nach den Ansprüchen 56 und 57, dadurch gekennzeichnet, dass die drehbaren Abweiserflügel (301; 311) der ersten Gruppe der Ringwand (60) des ersten Flansches (57) am nächsten kommen.

59. Mähmaschine nach zumindest einem der Ansprüche 30 bis 58, dadurch gekennzeichnet, dass die drehbaren Abweiserflügel (30; 31) aus einem biegebeständigen Material ausgeführt sind.

**Claims**

1. A mower (2) comprising a chassis (13) which supports, by means of connecting members (14), a cutting member (4; 5; 5'; 6) equipped with cutting tools (7) and a rotating drum (9; 11) which extends over the said cutting member (4; 6) and rotates about an axis of rotation (58) directed upwards, a device (22) for driving the said cutting member (4; 5; 5'; 6) and/or the said rotating drum (9; 11) and/or at least one part (23; 26) of the said connecting members (14) penetrating inside the said rotating drum (9; 11) by passing through the upper crown (32, 42, 621, 721, 781) of the said rotating drum substantially along its axis of rotation (58), a space which forms a clearance being provided between the internal edge of the said upper crown (32, 42, 621, 721, 781) of the rotating drum (9; 11) and the said drive device (22) and/or the said part (23; 26) of the connecting members (14) which penetrate inside the rotating drum (9; 11), characterised in that on or over the said upper crown (32, 42, 621, 721, 781) of the rotating drum (9; 11) are arranged rotating push-back blades (30; 31) which extend from the vicinity of the periphery of the said upper crown (32, 42, 621, 721, 781) into the vicinity of the said space so as to prevent the introduction of plants or other matter through this space into the interior of the said rotating drum (9; 11).

2. A mower as claimed in claim 1, characterised in that the rotating push-back blades (30; 31) are directed outwards in a direction opposite to their direction of rotation (38; 37).

3. A mower as claimed in at least one of the claims 1 or 2, characterised in that a plugging flange (29; 46; 47; 55) is arranged opposite the rotating push-back blades (30; 31).

4. A mower as claimed in claim 3, characterised in that the outer diameter of the plugging flange (29; 55) is smaller that the outer diameter swept by the rotating push-back blades (30; 31).

5. A mower as claimed in claim 3, characterised in that the outer diameter of the plugging flange (46; 47) is substantially equal to the outer diameter swept by the rotating push-back blades (30, 31).

6. A mower as claimed in at least one of the claims 3 to 5, characterised in that the plugging flange (47) comprises air supply holes (48).

7. A mower as claimed in at least one of the claims 3 to 6, characterised in that the outer edge of the plugging flange (29; 46; 47) is somewhat folded downwards.

8. A mower as claimed in at least one of the claims 1 to 7, characterised in that the outer diameter swept by the rotating push-back blades (30; 31) is greater than the outer diameter of the upper part (24) of the envelope of the rotating drum (9; 11).

9. A mower as claimed in claim 8, characterised in that the average diameter swept by the rotating push-back blades (30; 31) is substantially equal to the outer diameter of the upper part (24) of the envelope of the rotating drum (9; 11).

10. A mower as claimed in at least one of the claims 1 to 9, characterised in that the rotating push-back blades (30; 31) are fixed to one of the faces of a crown-shaped flange (33; 40; 54; 62, 621; 72, 721; 78, 781).

11. A mower as claimed in at least one of the claims 1 to 10, characterised in that a tubular member (34; 41; 52) extends at the level of the internal diameter swept by the rotating pushback blades (30; 31).

12. A mower as claimed in claim 11, characterised in that all the rotating push-back blades (30; 31) are connected to one another at the level of the internal diameter which they sweep, by means of the said tubular member (34; 41; 52).

13. A mower as claimed in at least one of the claims 11 or 12, characterised in that the tubular member (34; 41; 52) extends at least substantially up to the upper part of the rotating pushback blades (30; 31).

14. A mower as claimed in at least one of the claims 11 to 13, and claim 10, characterised in that the crown-shaped flange (33; 40; 54) is connected to the tubular member (34; 41; 52) at the level of its internal diameter.

15. A mower as claimed in at least one of the claims 1 to 14, characterised in that the rotating push-back blades (30; 31) are formed by a cast or injected material.

16. A mower as claimed in at least one of the claims 1 to 15, characterised in that the rotating push-back blades (30; 31) are fixed to the rotating drum (9; 11).

17. A mower as claimed in claim 16, characterised in that the rotating push-back blades (30; 31) are fixed to the rotating drum (9; 11) by means of snap-fixing members (36).

18. A mower as claimed in at least one of the claims 1 to 17, characterised in that the cutting member (4; 6) is a rotating cutting member.

19. A mower as claimed in claim 18, characterised in that it comprises a plurality of rotating cutting members (4; 5; 5'; 6), of which a first group (4; 5') rotates in one direction (38) and a second group (5; 6) rotates in the opposite direction (37), and that the rotating push-back blades (30) which are arranged on the upper part (24) of the rotating drum (9) which is mounted above a cutting member (4) of the first group are directed in the opposite direction to the rotating push-back blades (31) which are arranged on the upper part (24) of the rotating drum (11) which is mounted above a cutting member (6) of the second group.

20. A mower as claimed in claim 19, characterised in that the cutting members (4, 5, 5', 6) are guided in rotation on the upper part of a housing (3) which is connected to the chassis (13) by means of the connecting members (14), and that over at least one part of the rotating cutting members (4; 6) are mounted rotating drums (9; 11), of which at least one is penetrated by the device (22) for driving the rotating cutting members (4, 5, 5', 6) and/or by at least one part of the said connecting members (14).

21. A mower as claimed in at least one of the claims 1 to 20, characterised in that the cutting member is arranged along a cutter bar (1), that a rotating drum (9; 11) extends to each end of the cutter bar (1) which is connected to the chassis (13) by means of the connecting members (14) which pass through the said rotating drums (9; II), the drive device (22) extending through at least one of the said rotating drums (9; 11), that the said rotating drums (9; 11) are counter-rotating, and that the rotating push-back blades (30; 31) arranged on the upper part (24) of one of the rotating drums (9; 11) extend in the opposite direction to the rotating push-back blades arranged on the upper part (24) of the other rotating drum.

22. A mower as claimed in at least one of the claims 19 to 21, characterised in that on the upper part (24) of the rotating drums (9; 11) is arranged a rotating push-back member (39) comprising a crown-shaped flange (40) which is equipped on one of its faces with push-back blades (30) adapted to equip a rotating drum (9) rotating in one direction (38) and is provided on the other of its faces with push-back blades (31) adapted to equip a rotating drum (11) rotating in the opposite direction (37).

23. A mower as claimed in claim 22, characterised in that the rotating drum (9; 11) comprises members (42) which prevent the operation of the rotating push-back blades (31; 30) which are not required to operate.

24. A mower as claimed in claim 23, characterised in that the members (42) which prevent the operation of the rotating pushback blades (31; 30) which are not required to operate are formed by a circular cavity (42), the cross-section of which is in the form of a U open upwardly which is arranged on the upper part (24) of the rotating drum (9; 11) and into which extend the said rotating push-back blades (31; 30) which are not required to operate.

25. A mower as claimed in claim 24, characterised in that the outer wing (43) of the circular cavity (42) extends substantially to the level of the crown-shaped flange (40) of the rotating push-back member (39).

26. A mower as claimed in at least one of the claims 19 to 21, characterised in that on the upper part (24) of the rotating drums (9; II) is arranged a rotating push-back member (49) comprising bulges (50) substantially in the form of a curved triangle, the tip (53) of which is directed outwards and one of the sides of which forms a push-back blade (30) operating in one direction of rotation (38) whilst the other side forms a pushback blade (31) operating in the opposite direction of rotation (37).

27. A mower as claimed in claim 26, characterised in that flange portions (54) extend between the bulges (50).

28. A mower as claimed in at least one of the claims 26 or 27, characterised in that the bases (51) of the bulges (50) are abutting.

29. A mower as claimed in at least one of the preceding claims, characterised in that the height of the rotating drum (9; 11) is at least equal to the greatest diameter of its external envelope.

30. A mower as claimed in at least one of the claims 1, 2, 8 to 10, 15, 16, 18 to 25 or 29, characterised in that the rotating pushback blades (30; 31) are substantially or entirely uncovered, and that a baffle (56) is arranged between the part (23; 26) of the connecting members (14) which penetrates inside the rotating drum (9; 11) and the said rotating drum (9; 11), the said baffle (56) extending at the level of the internal diameter swept by the rotating push-back blades (30; 31).

31. A mower as claimed in claim 30, characterised in that the baffle (56) comprises a first flange (57) which has a wall of rotation (60) centred on the axis of rotation (58) of the rotating drum (9; 11), the said wall of revolution (60) extending at its free end (61) into the vicinity of a second flange (62; 72; 78).

32. A mower as claimed in claim 31, characterised in that the wall of revolution (60) is arranged at the level of the external diameter (59) of the first flange (57).

33. A mower as claimed in at least one of the claims 31 or 32, characterised in that the second flange (62; 72; 78) is provided with a wall of revolution (64; 74; 80) centred on the axis of rotation (58) of the rotating drum (9; 11), the said wall (64; 74; 80) extending towards the first flange (57).

34. A mower as claimed in claim 33, characterised in that the wall of revolution (64; 80) of the second flange (62; 78) extends into the vicinity of the wall of revolution (60) of the first flange (57).

35. A mower as claimed in at least one of claims 33 or 34, characterised in that the wall of revolution (64; 74; 80) of the second flange (62; 72; 78) extends closer to the axis of rotation (58) of the drum (9; 11) than the wall of revolution (60) of the first flange (57).

36. A mower as claimed in at least one of the claims 33 to 35, characterised in that the end (65; 75) of the wall of revolution (64; 74) of the second flange (62; 72) closest to the first flange (57) extends into the vicinity of the first flange (57).

37. A mower as claimed in at least one of the claims 33 to 36, characterised in that the wall of revolution (64; 74; 80) of the second flange (62; 72; 78) is substantially cylindrical.

38. A mower as claimed in at least one of the claims 31 to 37, characterised in that the first flange (57) comprises a substantially circular crown (571).

39. A mower as claimed in at least one of the claims 31 to 38, characterised in that the second flange (62; 72; 78) comprises a substantially circular crown (621; 721; 821).

40. A mower as claimed in claim 38 and/or 39, characterised in that the crown (571) of the first flange (57) and/or the crown (621; 721; 781) of the second flange (62; 72; 78) extends substantially at right-angles to the axis of rotation (58) of the rotating drum (9; 11).

41. A mower as claimed in at least one of the claims 31 to 40, characterised in that the first flange (57) is located higher than the second flange (62; 72; 78) and is fixed to that part (23; 26) of the connecting members (14) which penetrates inside the rotating drum (9; 11), and that the second flange (62; 72; 78) is fixed to the rotating drum (9; 11).

42. A mower as claimed in claim 33 and claim 41, characterised in that the end (61) of the wall of revolution (60) of the first flange (57) is located lower than the end (65; 75; 81) of the wall of revolution (64; 74; 80) of the second flange (62; 72, 78).

43. A mower as claimed in claim 33, characterised in that the end (75; 81) of the wall of revolution (74; 80) of the second flange (72; 78) situated closest to the first flange (57) is provided with a substantially circular crown (76; 82).

44. A mower as claimed in claim 43, characterised in that the crown (76) extends outwards.

45. A mower as claimed in claim 43, characterised in that the crown (82) extends towards the axis of rotation (58) of the rotation drum (9; 11).

46. A mower as claimed in at least one of the claims 43 to 45, characterised in that the crown (76; 82) of the second flange (72; 78) extends substantially at right-angles to the axis of rotation (58) of the rotating drum (9; 11).

47. A mower as claimed in at least one of the claims 43 to 46, characterised in that the crown (76) is made of a flexible material.

48. A mower as claimed in claim 45, characterised in that the crown (82) is provided with a second wall of revolution (84) centred on the axis rotation (58) of the rotating drum (9; 11) and the free end (85) of which extends into the vicinity of the first flange (57).

49. A mower as claimed in claim 48, characterised in that the second wall of revolution (84) of the second flange (78) extends closer to the axis of rotation (58) of the rotating drum (9; II) than the first wall (80).

50. A mower as claimed in at least one of the claims 48 or 49, characterised in that the second wall of revolution (84) of the second flange (78) is substantially cylindrical.

51. A mower as claimed in at least one of the claims 31 to 50, characterised in that the rotating push-back blades (30; 31) are fixed to the upper face (66; 77; 86) of the flange (62; 72; 78) located in the lowest position.

52. A mower as claimed in claim 51, characterised in that the free end (69; 89) of the rotating push-back blades (30; 31) extends at least substantially to the level of the flange (57) located in the highest position.

53. A mower as claimed in claim 52 and claim 38, characterised in that the free end (69; 89) of the rotating push-back blades (30; 31) extends at least substantially to the level of the crown (571) of the flange (57) located in the highest position.

54. A mower as claimed in at least one of the claims 51 to 53, characterised in that that the edge (70; 90) of the rotating push-back blades (30; 31) which is situated opposite the wall of revolution (60) of the first flange (57) is inclined outwards and upwards in such manner that the upper part of the said edge (70; 90) is further removed from the said wall (60) than its lower part.

55. A mower as claimed in at least one of the claims 30 to 54, characterised in that each rotating drum (9; 11) is provided with two groups of rotating push-back blades (301, 302; 311, 312), those (301; 311) in the first group extending more radially than those (302; 312) of the second group.

56. A mower as claimed in claim 55, characterised in that one rotating push-back blade (301; 311) of the first group and one rotating push-back blade (302; 312) of the second group form one and the same rotating push-back blade (30; 31).

57. A mower as claimed in at least one of the claims 55 or 56, characterised in that the rotating push-back blades (301; 311) of the first group are arranged, in relation to the direction of rotation (38; 37) of the rotating drums (9; 11), in front of the rotating push-back blades (302; 312) of the second group.

58. A mower as claimed in the claims 56 and 57, characterised in that the rotating push-back blades (301; 311) of the first group extend closest to the wall of revolution (60) of the first flange (57).

59. A mower as claimed in at least one of the claims 30 to 58, characterised in that the rotating push-back blades (30; 31) are formed from a material resistant to bending.

FIG.1

EP 0 213 052 B1

FIG. 2

24

29

35

31

33

34

36 32

11 26

FIG.3

37

31

33

31

31

29

35

26

I

31 32 II

31 31

EP 0 213 052 B1

FIG.4    FIG.6

46  45          47  45  48
30              41      31
39                      39
31                      30
43                      43
40  42  44              42  40
9                       26      11
23                      22

FIG.5    FIG.7

38  42  30  45  31  42  37
41              45          41
46              23  26      47
                22          48
IV
40                          31
39                          40
30      31              39

3

## FIG.8

## FIG.9

FIG.10

EP 0 213 052 B1

EP 0 213 052 B1

FIG.11

FIG.12

6

EP  0 213 052  B1

FIG.13

FIG.14

7

FIG.15

FIG.16